# FASCICULE DE BREVET EUROPEEN

(11) **EP 1 572 509 B1**
(45) Date de publication et mention de la délivrance du brevet: **16.01.2008**
(21) Numéro de dépôt: 03782402.6
(22) Date de dépôt: 15.12.2003
(51) Int. Cl.: B60S 1/40

(54) **CONNECTEUR RELIANT UN BRAS D'ESSUIE-GLACE A UN BALAI D'ESSUYAGE**
STECKER ZUR VERBINDUNG EINES WISCHERARMES MIT EINEM WISCHBLATT
CONNECTOR WHICH IS USED TO JOIN A WINDSCREEN WIPER ARM TO A WIPER BLADE

(30) Priorité: 20.12.2002 FR 0216451
(43) Date de publication de la demande: 14.09.2005
(73) Titulaire: VALEO SYSTEMES D'ESSUYAGE, 78321 La Verrière (FR)
(72) Inventeur: THIENARD, Jean-Claude, F-27140 Gisors (FR)
(86) Numéro de dépôt international: PCT/EP2003/014236
(87) Numéro de publication internationale: WO 2004/056625

(56) Documents cités:
- WO-A-01/15945
- WO-A-01/15946
- FR-A- 2 692 537
- US-A- 5 289 608

## Description

L'invention concerne une pièce de raccordement, aussi appelée connecteur, utilisée pour relier l'extrémité d'un bras d'essuie-glace à un élément d'une structure de support de la lame d'essuyage du balai d'essuyage.

L'invention propose plus particulièrement un connecteur pour relier une extrémité d'un bras d'essuie-glace à un premier axe transversal d'articulation appartenant à un élément de structure d'un balai d'essuyage, du type comportant deux joues latérales verticales parallèles qui sont reliées entre-elles par un corps délimitant un premier logement dans lequel le premier axe d'articulation peut être introduit radialement, du type :
- qui est apte à être reçu au moins en partie dans le fond de l'extrémité d'un bras, qui appartient à une première catégorie de bras en forme de crochet en U, par l'intermédiaire d'une portion de face cylindrique convexe externe du corps et par l'intermédiaire de formes en relief agencées sur les faces longitudinales verticales internes en vis-à-vis des joues latérales, de sorte que le connecteur soit apte à être reçu dans le fond d'extrémités de bras appartenant à la première catégorie de bras de différentes tailles, et
- qui est apte à recevoir un deuxième axe transversal, qui appartient à une deuxième catégorie de bras et qui s'étend transversalement depuis un bord latéral de l'extrémité du bras, dans un deuxième logement cylindrique du corps à l'intérieur duquel le deuxième axe peut être introduit transversalement, et qui est délimité en partie par une languette de blocage déformable élastiquement qui s'étend globalement longitudinalement, dont une première extrémité longitudinale est fixée au corps, et qui est apte à s'escamoter pour permettre l'introduction du deuxième axe et provoquer le blocage transversal du deuxième axe en position montée dans le deuxième logement.

L'augmentation des types et formes des véhicules automobiles actuels provoque une augmentation des catégories de bras et des dimensions des bras pour chaque catégorie.

La languette de blocage permet, en utilisant un même connecteur, de relier le balai d'essuyage à différentes catégories de bras d'essuyage, une première catégorie dans laquelle l'extrémité du bras est en forme de U, et une deuxième catégorie dans laquelle l'extrémité du bras porte un axe transversal.

Par l'intermédiaire des formes en relief, le connecteur est particulièrement adapté pour des bras de la première catégorie qui peuvent avoir de nombreuses dimensions, cependant, il n'est pas adapté à recevoir des extrémités de bras de la deuxième catégorie qui ont plusieurs dimensions.

En effet, selon une conception connue, décrite dans le document WO-A-01.15946, la languette de blocage est apte à se déformer élastiquement pour accueillir l'axe transversal de l'extrémité du bras. Ainsi, pour que le connecteur soit apte à recevoir un deuxième axe transversal d'une taille supérieure, c'est-à-dire de diamètre plus important, il faut que la languette de blocage soit conçue pour se déformer suivant une plus grande amplitude.

Ceci implique que, lorsque le connecteur reçoit un axe d'une première taille qui est la plus petite, l'amplitude de la déformation de la languette de blocage est faible. Ainsi, l'effort de rappel élastique permettant à la languette de blocage de se maintenir dans la gorge périphérique de l'axe est plus faible que celui provoqué lorsque le connecteur reçoit un axe d'une deuxième dimension, supérieure à la première.

Par ailleurs, du fait des faibles dimensions d'un axe de la première taille, la profondeur de la gorge qui reçoit la languette de blocage est relativement faible, ce qui implique une surface d'appui de la languette sur les parois de la gorge elle aussi réduite.

Il s'en suit que le blocage réalisé par la languette de blocage, lorsque le connecteur reçoit un axe de la première taille, est peu efficace, en comparaison avec le blocage réalisé lorsque le connecteur reçoit un axe de la deuxième taille pour lequel l'effort de rappel élastique et la surface d'appui de la languette sur les parois de la gorge sont supérieurs.

C'est pourquoi il est proposé d'utiliser un connecteur adapté à chaque taille ou dimension de l'axe.

Puisque les balais d'essuyage sont des éléments qui s'usent rapidement, il est nécessaire à l'utilisateur de les remplacer régulièrement. Pour cela, il est possible de trouver dans le commerce des balais d'essuyage neufs accompagnés de connecteurs. Comme les constructeurs ne peuvent connaître ni la catégorie, ni la taille du bras d'essuie-glace du véhicule du conducteur, ceux-ci sont alors obligés de rassembler dans un même emballage plusieurs connecteurs qui permettent de relier un balai à l'ensemble des catégories et tailles des bras.

Parmi les connecteurs fournis dans l'emballage, un seul sera utilisé pour relier le balai d'essuyage au bras d'essuyage, les autres, inutiles, seront jetés au rebus.

Ainsi, les constructeurs sont certains de commercialiser des connecteurs dont une partie sera automatiquement jetée, il en résulte donc une perte de la matière première commercialisée, qui aurait pu être utilisée pour la fabrication d'autres connecteurs.

Pour éviter cela, l'invention propose un connecteur qui permette, à lui seul, de relier un balai d'essuyage à une extrémité d'un bras d'essuyage, parmi plusieurs catégories de bras, et plusieurs tailles de bras.

Dans ce but, l'invention propose un connecteur du type décrit précédemment, caractérisé en ce que la deuxième extrémité longitudinale de la languette de blocage est normalement reliée au corps par un film de matière, et en ce que les dimensions du film sont déterminées de manière que le deuxième logement soit apte à recevoir un deuxième axe pouvant avoir une première ou une deuxième taille, la deuxième taille étant supérieure à la première taille, et l'introduction d'un deuxième axe de la deuxième taille provoque la rupture du film de matière.

Selon d'autres caractéristiques de l'invention,
- le corps comporte un tronçon avant qui délimite le premier logement, dont la paroi externe avant est apte à être reçue dans le fond du crochet en U du bras et un tronçon arrière qui s'étend horizontalement au-dessus de la languette de blocage, dont la face supérieure horizontale définit une face d'appui d'une branche supérieure du crochet en U, et dont la face inférieure comporte une portion concave qui délimite en partie le deuxième logement, en association avec une portion concave en vis-à-vis de la face supérieure de la languette de blocage ;
- le connecteur comporte un élément de verrouillage qui est apte à être reçu dans une gorge annulaire formée dans la paroi cylindrique d'un deuxième axe, de première ou de deuxième taille, pour le blocage transversal du deuxième axe en position montée dans le deuxième logement ;
- la languette de blocage exerce un effort élastique de blocage sur le deuxième axe, pour empêcher la sortie de l'élément de verrouillage hors de la gorge annulaire ;
- l'élément de verrouillage consiste en un ergot qui est porté par la languette de blocage ;
- la deuxième extrémité longitudinale de la languette de blocage est prolongée par une patte de commande du déblocage du deuxième axe ;
- l'élément de verrouillage consiste en un ergot qui est porté par le corps ;
- le connecteur comporte une deuxième languette déformable élastiquement qui s'étend globalement longitudinalement vers l'avant depuis l'extrémité longitudinale avant du tronçon arrière du corps, et qui est apte à s'escamoter vers le haut pour permettre l'introduction du deuxième axe et qui est apte à le loger au moins en partie dans la gorge périphérique du deuxième axe pour réaliser le blocage transversal du deuxième axe, en association avec la languette de blocage ;
- la deuxième languette est de largeur transversale complémentaire de la largeur de la gorge annulaire du deuxième axe ;
- l'extrémité longitudinale avant de la languette de blocage est fixée au tronçon avant ;
- le corps comporte aussi un tronçon inférieur arrière dont une face avant comporte une nervure qui est apte à coopérer avec la patte de déblocage pour maintenir la languette de blocage dans une position d'ouverture du deuxième logement ;
- le connecteur est apte à recevoir l'extrémité d'une troisième catégorie de bras, qui consiste en un tronçon de profilé qui s'étend globalement longitudinalement vers l'avant, dans un troisième logement cylindrique d'axe principal longitudinal et qui est ouvert dans sa face arrière ;
- le troisième logement est réalisé dans une pièce rapportée au connecteur qui est apte à être fixée au connecteur par coopération de formes complémentaires ;
- le tronçon avant du corps comporte un trou borgne d'axe longitudinal qui est débouchant dans sa face arrière et qui forme l'extrémité avant du troisième logement, et la face inférieure du tronçon arrière et la face supérieure du tronçon inférieur arrière du corps délimitent, en combinaison avec les faces longitudinales verticales internes des joues latérales, un tronçon arrière du troisième logement ;
- l'extrémité d'un bras appartenant à la troisième catégorie de bras comporte un ergot qui fait saillie vers la haut par rapport à la face supérieure de l'extrémité du bras, et qui est apte à être reçu dans l'orifice vertical d'accès du tronçon arrière pour le blocage longitudinal de l'extrémité du bras en position montée dans le troisième logement ;
- une portion de la languette de blocage est recourbée vers la bas de manière que, pour au moins une taille d'un bras appartenant à la première catégorie de bras, et lorsque le bras est en position montée, le film de matière est rompu et la languette de blocage est déformée élastiquement vers le haut de manière à exercer un effort globalement vertical vers le bas sur la face supérieure d'un deuxième tronçon inférieur horizontal de l'extrémité du bras ;
- les bords latéraux de la languette de blocage sont prolongés transversalement vers l'extérieur par des bossages arrondis
- la deuxième languette comporte deux pions latéraux agencés de part et d'autre de l'extrémité longitudinale avant de la deuxième languette qui s'étendent transversalement vers l'extérieur du connecteur et qui traversent un orifice de la joue latérale associée de manière que l'extrémité libre de chaque pion affleure avec la face verticale externe de la joue associée ;
- l'extrémité avant libre de la deuxième languette est recourbée vers le bas de manière que lorsque l'extrémité d'un bras appartenant à la troisième catégorie de bras est introduite dans le troisième logement, la deuxième languette est déformée élastiquement vers le haut, et l'extrémité avant libre de la deuxième languette exerce un effort de rappel orienté globalement vers le bas sur la face supérieure de l'extrémité du bras ;
- lorsqu'un bras appartenant à la troisième catégorie de bras est en position montée dans le troisième logement, les pions latéraux sont en butée verticale contre un bord supérieur de l'orifice de la joue associé ;
- l'extrémité avant libre de la deuxième languette est prolongée vers le haut par un doigt de manière que lorsque l'extrémité d'un bras appartenant à la première catégorie de bras est en position montée, la deuxième languette est déformée élastiquement vers le bas et exerce par l'intermédiaire du doigt, un effort de rappel orienté globalement vers le haut, sur une face inférieure d'un premier tronçon supérieur horizontal de l'extrémité du bras ;
- le tronçon d'extrémité avant de chaque joue, qui s'étend longitudinalement en porte-à-faux en avant du corps est déformable élastiquement et comporte, sur sa face longitudinale verticale interne une butée formant rampe, de manière à s'escamoter lors de l'introduction de l'extrémité d'un bras appartenant à la première catégorie de bras, et de manière à réaliser le blocage en position montée du crochet en U autour du corps du connecteur ;
- la butée formant rampe s'étend sur une portion supérieure du tronçon d'extrémité avant de la joue associée et en ce qu'une portion inférieure du tronçon d'extrémité avant comporte une ouverture d'introduction du crochet en U
- les formes en relief comportent une nervure agencée sur la face longitudinale verticale interne de chaque joue du connecteur qui s'étend longitudinalement au-dessus de la face supérieure du tronçon arrière du corps pour le positionnement d'une extrémité de bras appartenant à la première catégorie de bras ;
- les nervures sont réalisées de manière que leur face supérieure forment chacune une surface d'appui vertical de la branche supérieure du crochet en U d'au moins une première taille de bras, et de manière que leurs faces verticales en vis-à-vis réalisent le positionnement transversal de la branche supérieure du crochet en U d'un bras d'une deuxième taille ;
- les formes en relief comportent un deuxième bossage agencé verticalement au-dessous du corps pour réaliser au moins en partie le positionnement du connecteur dans le fond d'une extrémité de bras appartenant à la première catégorie de bras ;
- le deuxième bossage est réalisé de manière que sa face supérieure réalise le positionnement vertical du connecteur pour une première taille de bras, sa face inférieure réalisée le positionnement vertical du connecteur pour une deuxième taille de bras, et sa face verticale interne réalise le positionnement transversal du connecteur pour une troisième taille de bras ;
- la face inférieure de la languette de blocage comporte des nervures de positionnement vertical et/ou transversal d'un bras de la première catégorie d'au moins une taille ;
- chaque nervure de positionnement s'étend globalement verticalement vers le bas le long d'un bord latéral de la face inférieure de la languette de blocage ;
- les bossages de la languette de blocage s'étendent transversalement de manière que l'extrémité transversale libre de chaque bossage affleure avec la face verticale externe de la joue associée ;
- chaque bossage est cintré de manière que la courbure de sa face supérieure soit globalement complémentaire à la paroi cylindrique externe d'un deuxième axe de la deuxième taille ;
- la courbure d'un bord supérieur de l'ouverture (82) est sensiblement identique à la courbure de la paroi cylindrique externe d'un deuxième axe de la deuxième taille ;
- les pions latéraux comportent chacun une surface d'appui contre la surface cylindrique externe d'un deuxième axe de la deuxième taille qui est complémentaire à cette paroi cylindrique externe ;
- chaque joue comporte une rainure qui s'étend verticalement vers le bas depuis le bord supérieur de la joue associée et qui est complémentaire à un élément de manoeuvre du connecteur ;
- la rainure forme globalement un T inversé dont le bord inférieur de la branche horizontale s'étend verticalement au-dessus de la face supérieure de l'élément avant du corps du connecteur ;
- les nervures s'étendent longitudinalement vers l'avant de manière à s'étendre jusqu'à l'extrémité avant du tronçon avant du corps du connecteur.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective éclatée d'un essuie-glace représentant un balai d'essuyage et les différentes catégories de bras qui peuvent être reliées au balai d'essuyage par l'intermédiaire d'un connecteur conforme à l'invention ;
- la figure 2 est un détail à plus grande échelle du connecteur conforme à l'invention représenté à la figure 1 ;
- la figure 2A est une vue en perspective d'une coupe suivant la ligne A-A du connecteur représenté à la figure 2 ;
- la figure 3 est une coupe verticale longitudinale du connecteur représenté à la figure 1, conformément à un premier mode de réalisation de l'invention ;
- la figure 4 est une vue similaire à celle de la figure 3, dans laquelle la pièce rapportée, à l'intérieur de laquelle le troisième logement est réalisé, est fixée au connecteur ;
- la figure 5 est une section verticale transversale suivant la ligne V-V du connecteur représenté à la figure 4 ;
- les figures 6a à 6c sont des sections longitudinales verticales et à plus grande échelle de la partie arrière du corps du connecteur, représentant les diverses positions de la patte de commande par rapport au tronçon inférieur arrière du corps du connecteur ;
- la figure 7 est une vue similaire à celle de la figure 4, représentant un autre mode de réalisation du connecteur ;
- la figure 8 est une vue de dessus du connecteur représenté à la figure 7 ;
- la figure 9 est une vue similaire à celle de la figure 7, dans laquelle un bras appartenant à la première catégorie de bras et de la première taille est représenté en position montée autour du corps du connecteur ;
- la figure 10 est une section transversale verticale du connecteur et du bras représentés à la figure 9, représentant l'appui des branches supérieure et inférieure du crochet en U du bras ;
- les figures 11 et 12 sont des vues similaires à celles des figures 9 et 10, dans lesquelles un bras appartenant à la première catégorie de bras, et de la deuxième taille est représenté en position montée autour du corps du connecteur ;
- les figures 13 et 14 sont des vues similaires à celles des figures 9 et 10, dans lesquelles un bras appartenant à la première catégorie de bras, et de la troisième taille, est représenté en position montée autour du corps du connecteur ;
- la figure 15 est une vue de dessus étape grande échelle de l'extrémité avant du connecteur et du bras représentés à la figure 9, représentant l'appui de la face avant de la branche intermédiaire courbe du crochet en U sur les butées formant rampe du connecteur ;
- la figure 16 est une vue similaire à celle de la figure 9 dans laquelle un bras appartenant à la troisième catégorie de bras est représenté en position montée dans le troisième logement du connecteur ;
- les figures 17 et 18 sont des vues similaires à celle des figures 9 et 10, dans lesquelles un bras appartenant à la deuxième catégorie de bras, et de la première taille, est représenté en position montée dans le deuxième logement du connecteur ;
- les figures 19 et 20 sont des vues similaires à celles des figures 17 et 18, dans lesquelles un bras appartenant à la deuxième catégorie de bras, et de la deuxième taille, est représenté en position montée dans le deuxième logement du connecteur ;
- la figure 21 est une représentation schématique en perspective d'un connecteur conforme à une autre variante de réalisation de l'invention ;
- la figure 22 est un détail en perspective de dessous et à plus grande échelle de la languette de blocage représentée à la figure 21 ;
- la figure 23 est un détail en perspective et à plus grande échelle des pions latéraux du connecteur représenté à la figure 21 ;
- la figure 24 est un détail en perspective et à plus grande échelle du connecteur représenté à la figure 21, représentant la disposition des rainures en "T" inversé ;
- la figure 25 est une vue de côté du connecteur représenté à la figure 21 ;
- la figure 26 est une vue en perspective du connecteur représenté à la figure 21.

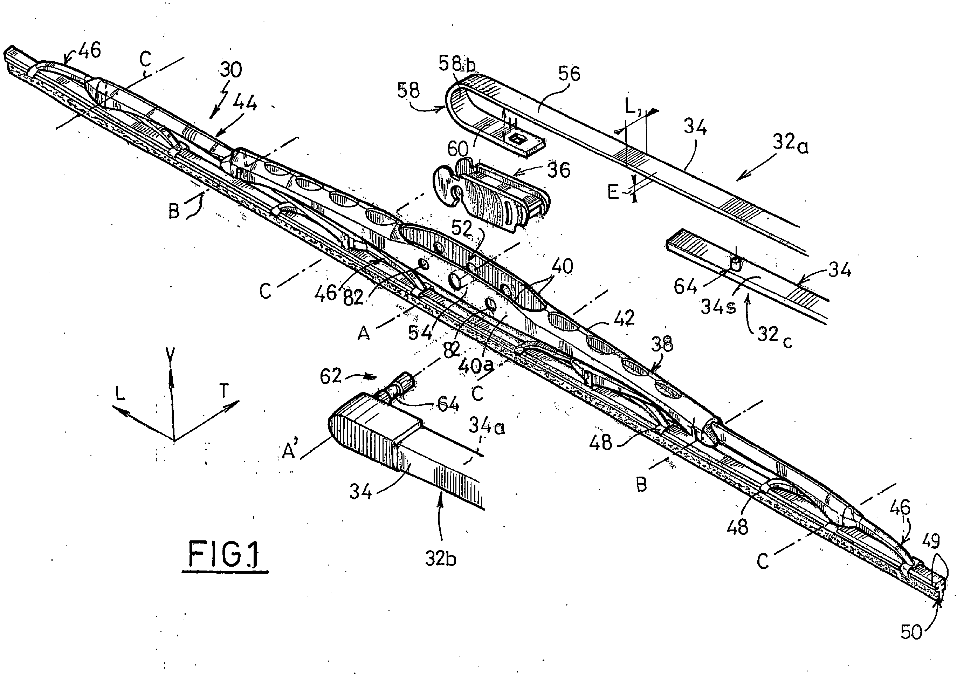

Pour la description de l'invention, on adoptera à titre non limitatif les orientations verticale, longitudinale et transversale selon le repère V, L, T indiqué à la figure 1.

On adoptera aussi l'orientation d'arrière en avant comme étant la direction longitudinale et de droite à gauche en se reportant à la figure 1.

Dans la description qui va suivre, des éléments identiques, similaires ou analogues seront désignés par les mêmes chiffres de référence.

On a représenté à la figure 1 un balai d'essuyage 30 destiné à être monté à rotation autour d'un axe transversal A à l'extrémité longitudinale avant 34 d'un bras d'essuie-glace 32a, 32b, 32c par l'intermédiaire d'un connecteur d'adaptation 36.

Le balai d'essuyage 30 comporte un étrier principal 38 muni de deux ailes longitudinales parallèles 40 reliées par un dos supérieur transversal 42.

A chacune de ses deux extrémités longitudinales, l'étrier principal 38 porte à rotation, autour d'axes transversaux B, des palonniers 44 qui portent eux-mêmes à leurs extrémités des palonniers secondaires 46 montés à rotation autour d'axes transversaux C.

Chacun des palonniers secondaires 46 comporte à ses extrémités longitudinales des griffes d'accrochage 48 à des vertèbres métalliques 49 de support d'une raclette d'essuyage 50 réalisée en matériau élastomère souple.

L'étrier principal 38, les palonniers 44 et les palonniers secondaires 46 forment une structure articulée qui est déformable dans un plan longitudinal sensiblement perpendiculaire au plan général de la vitre à essuyer (non représentée) et qui permet, à l'aide des vertèbres 49, de plaquer la raclette 50 sur toute sa longueur contre la vitre tout en répartissant de manière homogène la pression de contact entre la raclette 50 et la vitre sur toute la longueur du balai 30.

L'étrier principal 38 du balai 30 comporte, dans sa partie centrale, une ouverture supérieure 52 formée dans son dos supérieur 42 et dans laquelle on a agencé une tige transversale 54 reliant les deux ailes 40 et formant un premier axe transversal A d'articulation du balai 30 par rapport au bras d'essuie-glace 32a, 32b, 32c.

On a aussi représenté à la figure 1 les extrémités libres 34 de trois bras d'essuie-glace différents 32a, 32b, 32c représentant chacun une catégorie de bras d'essuie-glace existant sur les véhicules automobiles actuels, qui sont chacun apte à recevoir le balai d'essuyage 30 par l'intermédiaire d'un même connecteur 36.

Une première catégorie de bras 32a regroupe les bras dont l'extrémité à la forme d'un crochet en U, et qui comporte une branche supérieure horizontale 56 qui s'étend globalement horizontalement vers l'avant, une branche intermédiaire recourbée en C 58 dont l'extrémité supérieure est reliée à l'extrémité longitudinale avant de la branche supérieure 56, et une branche inférieure horizontale 60 qui s'étend longitudinalement vers l'arrière depuis l'extrémité inférieure de la branche intermédiaire 58.

Les bras 32a de cette première catégorie peuvent avoir plusieurs tailles, chacune définie par la largeur L et l'épaisseur E de chaque branche. Dans la description qui va suivre, on se référencera à trois tailles différentes de bras, pour chacune desquelles le groupe (L ; E ; H) formé par les valeurs en mm de la largeur L, de l'épaisseur E et de la hauteur du crochet H a pour valeurs (9 ; 3 ; 6.7), (9 ; 4 ;10,7) et (8 ; 3 ; 6.7) respectivement.

Une deuxième catégorie de bras 32b regroupe les bras dont l'extrémité 34 s'étend longitudinalement vers l'avant et qui porte sur une de ses faces latérales 34a un axe transversal 62 comportant sur sa paroi cylindrique extérieure une gorge 64 périphérique de section rectangulaire. Les bras 32b de cette première catégorie peuvent avoir une première et une deuxième tailles, correspondant chacune à un diamètre extérieur de l'axe 62. Dans la description qui va suivre, le bras 32b ayant la première taille sera celui pour laquelle le diamètre extérieur de l'axe 62 est le plus faible, c'est-à-dire ici 4,8 mm, et le bras 32b ayant la deuxième taille sera celui pour laquelle le diamètre extérieur de l'axe 62 est le plus élevé, c'est-à-dire ici 6,35 mm.

Enfin, une troisième catégorie de bras 32c regroupe les bras dont l'extrémité 34 consiste en un tronçon longitudinal horizontal unique de section transversale rectangulaire, qui porte sur sa face supérieure 34s un ergot 65 faisant saillie.

Le connecteur 36 permet de relier indifféremment le balai d'essuyage 30 à un bras 32a, 32b, 32c appartenant à chaque catégorie de bras et ayant l'une des tailles précitées.

Selon un mode de réalisation connu, le connecteur 36 est réalisé en un seul élément par moulage, généralement en matière plastique.

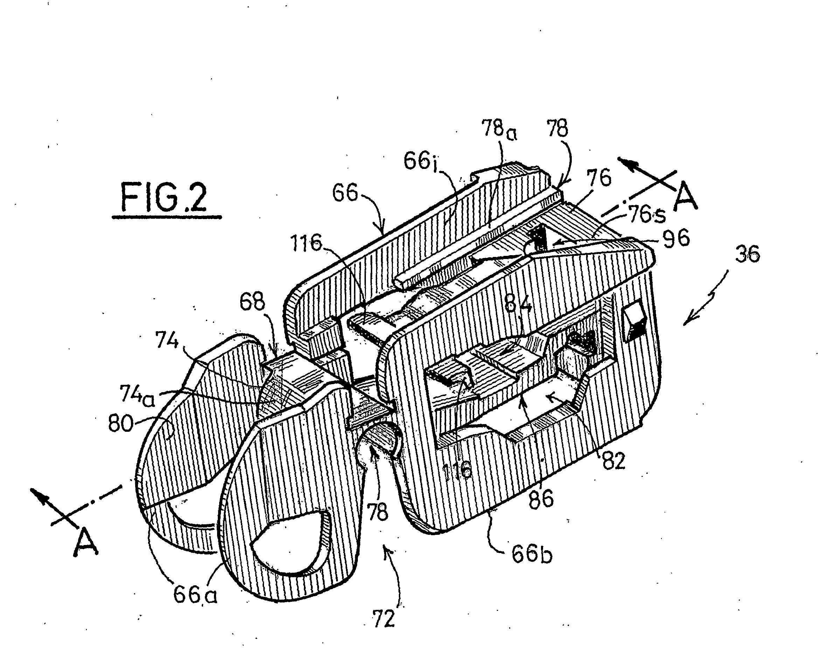

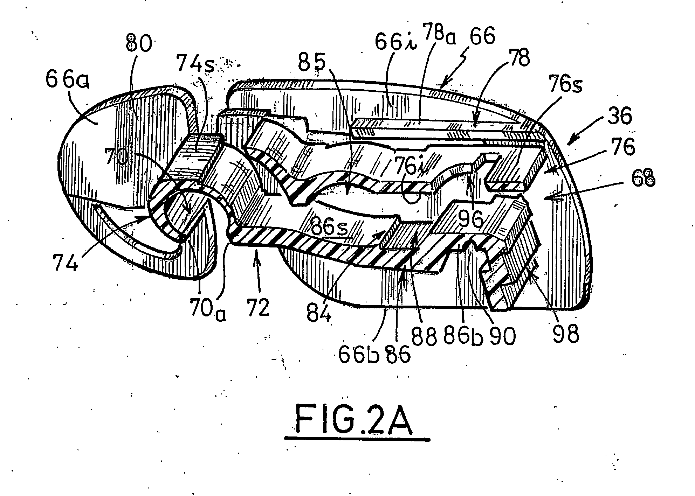

Comme on peut le voir plus en détail aux figures 2 et 2A, le connecteur comporte deux joues latérales verticales parallèles 66 qui sont destinées à être reçues sans jeu, au travers de l'ouverture 52 du dos 42 de l'étrier principal 38, entre les deux ailes 40 de l'étrier principal 38, de manière à positionner transversalement le connecteur 36 par rapport à l'étrier principal 38 du balai d'essuyage 30.

Les deux joues latérales 66 sont reliées entre elles par un corps transversal 68 qui délimite un premier logement cylindrique 70 complémentaire du premier axe d'articulation 54, et à l'intérieur duquel le premier axe d'articulation 54 peut être introduit radialement.

Pour cela, le premier logement est ouvert le long de sa génératrice transversale inférieure, et les deux joues 66 comportent chacune une ouverture 72 qui s'étend verticalement vers le bas depuis le premier logement 70 jusqu'au bord inférieur 66b de la joue 66 associée. La dimension longitudinale du premier logement 70 est déterminée de manière que la distance entre ses deux bords longitudinaux 70a soit inférieure au diamètre extérieur du premier axe d'articulation 54, l'introduction du premier axe d'articulation 54 dans le premier logement 70 se faisant par déformation élastique du corps 68.

Comme on peut le voir plus en détail notamment à la figure 2A, le corps 68 comporte un premier tronçon avant 74 qui délimite le premier logement 54, et un deuxième tronçon arrière 76 qui s'étend longitudinalement horizontalement en arrière du tronçon avant 74 de manière que sa face supérieure 76s soit agencée verticalement globalement à la même hauteur que la face supérieure 74s du tronçon avant 74.

Pour relier le balai d'essuyage 30 à un bras 32a appartenant à la première catégorie de bras, le corps 68 du connecteur 36 est apte à être reçu dans le fond de l'extrémité du bras 32a en forme de crochet en U, les deux joues 66 du connecteur 36 étant disposées transversalement de part et d'autre de l'extrémité 34 du bras 32a.

Pour cela, la face cylindrique avant 74a du tronçon avant 74 est convexe et est conformée de manière que lorsque le connecteur 36 est reçu dans l'extrémité 34 du bras 32a, au moins une génératrice transversale de la face cylindrique avant 74a est en contact avec la face cylindrique arrière concave 58b de la branche intermédiaire 58 du bras 32a.

De plus, des formes en relief 78 sont agencées sur les faces longitudinales verticales internes 66i en vis-à-vis des joues latérales 66 pour positionner verticalement et transversalement le connecteur 36 par rapport à l'extrémité 34 du bras 32a.

Les formes en relief 78 comportent d'une part une nervure 78a qui s'étend longitudinalement au-dessus de la face supérieure 76s du tronçon arrière du corps, et en arrière de la face supérieure 74s du tronçon avant 74 du corps 68.

Les deux nervures 78a sont de section rectangulaire, et leurs dimensions sont déterminées de manière que la distance entre leurs faces longitudinales verticales en vis-à-vis soit égale à la largeur L du bras la plus faible, c'est à dire ici 8mm.

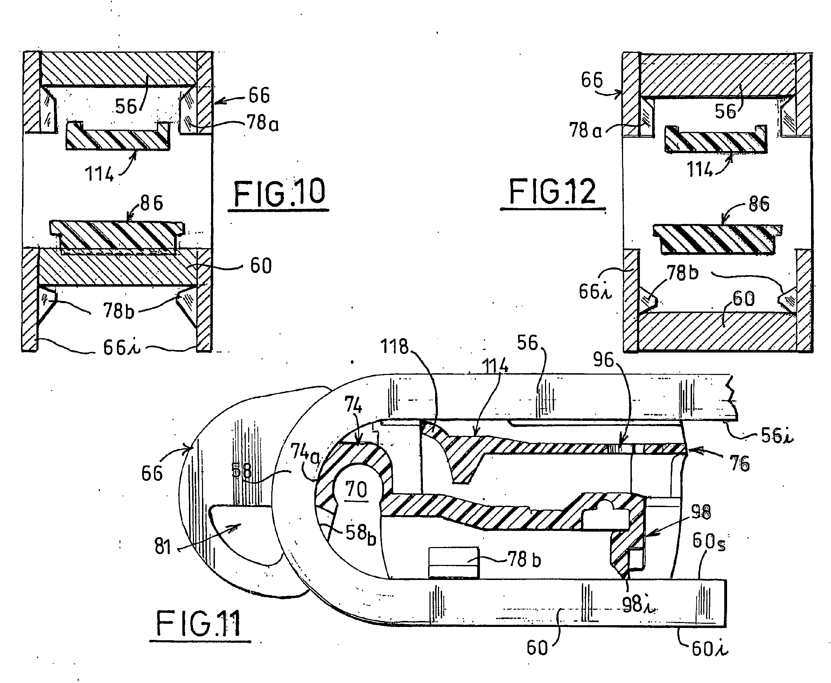

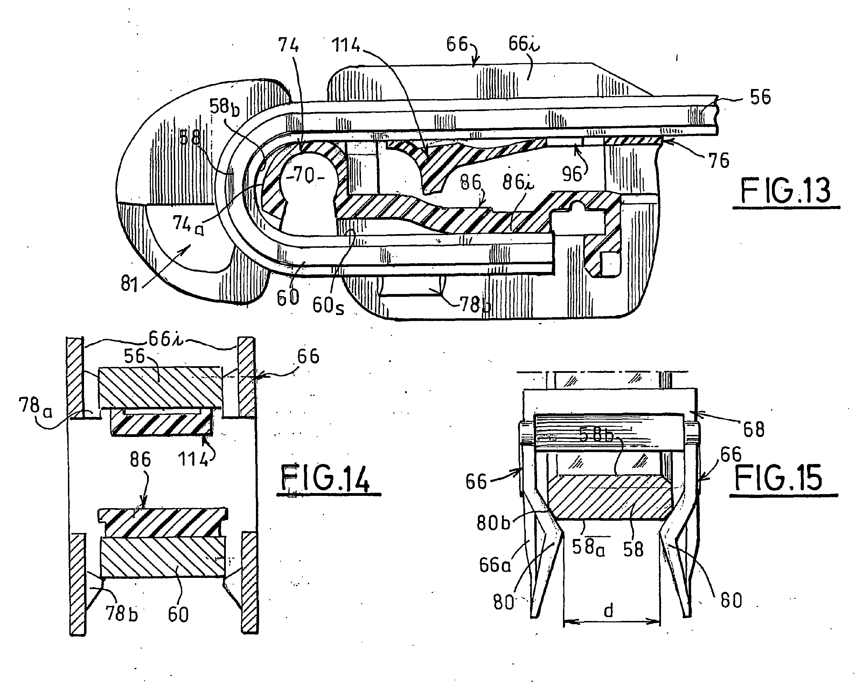

Ainsi, comme on l'a représenté aux figures 9 à 11, lorsque le crochet en U 34 est en position montée autour du corps 68 du connecteur 3.6, la branche supérieure 34 du crochet en U s'appuie sur les faces longitudinales horizontales supérieures des deux nervures 78a lorsque la largeur L du bras 32a est la plus élevée, pour réaliser le positionnement vertical du crochet en U. Aussi, comme on l'a représenté aux figures 13 et 14, la branche supérieure 56 du crochet en U s'appuie sur la face supérieure 76s du tronçon arrière lorsque la largeur L du bras est la plus faible.

Les formes en relief 78 comportent aussi un bossage 78b réalisé sur la face longitudinale verticale interne 66i de chaque joue 66, agencé verticalement en dessous du corps 68 du connecteur 36, et de section transversale verticale en V pour réaliser le positionnement vertical et/ou transversal de la branche inférieure 60 de l'extrémité en U du bras 32a.

Ainsi, comme on l'a représenté aux figures 9 et 10, pour la première taille de bras 32a, la branche inférieure 60 du crochet en U s'appuie sur les faces supérieures des deux bossages 78b, pour la deuxième taille de bras 32a, les bords latéraux de la branche inférieure 60 du crochet en U s'appuient sur les faces inférieures des deux bossages 78b, et pour la troisième taille de bras 32a, la branche inférieure 60 du crochet en U s'appuie contre les extrémités transversales de chaque bossage 78b.

Enfin, comme on l'a représenté à la figure 15, pour réaliser le blocage du crochet en U en position montée autour du corps 68 du connecteur 36, chaque joue 66 s'étend longitudinalement en avant du corps 68 et elle comporte, sur sa face longitudinale verticale interne 66i, une butée 80 formant rampe dont les dimensions sont déterminées de manière que la distance "d" séparant l'extrémité interne des deux rampes 80 soit inférieure à la largeur L du bras 32a la plus faible.

Chaque butée 80 consiste en une portion de la joue 66 qui est déformée vers l'intérieur du connecteur 36, à la manière d'un "V". Ainsi, la butée 80 conserve un épaisseur identique à celle de la joue 66 associée. Ceci est un avantage important lorsque le connecteur 36 est réalisé par moulage car la butée 80 ne comporte aucune surépaisseur qui risquerait de nuire à sa solidité.

Par ailleurs, comme on peut le voir notamment aux figures 9, 11 et 13, la butée 80 s'étend sur la partie supérieure du tronçon avant 66a de la joue 66 associée, et la partie inférieure du tronçon avant 66a de la joue 66 comporte un évidement 81.

Grâce à cet évidement 81, lors de l'introduction du crochet en U autour du corps 68, la branche inférieure 60 du crochet en U ne vient pas en contact avec les butées 80. Ceci permet de réaliser un positionnement vertical du crochet en U par rapport au corps 68 du connecteur 36, sans que l'utilisateur n'ait à réaliser de manoeuvres complexes, et avant l'introduction définitive du crochet en U autour du corps 68 du connecteur 36.

Le tronçon d'extrémité avant 66a de chaque joue 66 qui s'étend en porte-à-faux en avant du corps 68 est déformable élastiquement, de manière que lors de l'introduction du crochet en U autour du corps 68 du connecteur 36, les tronçons avant 66a des deux joues 66 se déforment élastiquement en s'écartant l'un de l'autre, et lorsque le crochet en U est en position montée autour du corps 68 du connecteur 36, les tronçons avant 66a des deux joues 66 reviennent élastiquement dans leur forme d'origine, de manière que les butées formant rampe 80 réalisent le blocage longitudinal du crochet en U en position montée autour du corps 68 du connecteur 36.

Aussi, les butées formant rampe 80 sont agencées longitudinalement sur les faces internes 66i des joues 66 de manière que lorsque le crochet en U est en position montée autour du corps 68 du connecteur 36, la face avant 58a de la branche intermédiaire 58 courbe du crochet en U s'appuie contre la face arrière 80b de chaque butée 80, quelle que soit la taille du bras 32a.

Les formes complexes du connecteur 36 rendent sa fabrication difficile. Ainsi, en ce qui concerne les bossages 78b, les contraintes de moulages obligent de les positionner à des cotes longitudinales différentes.

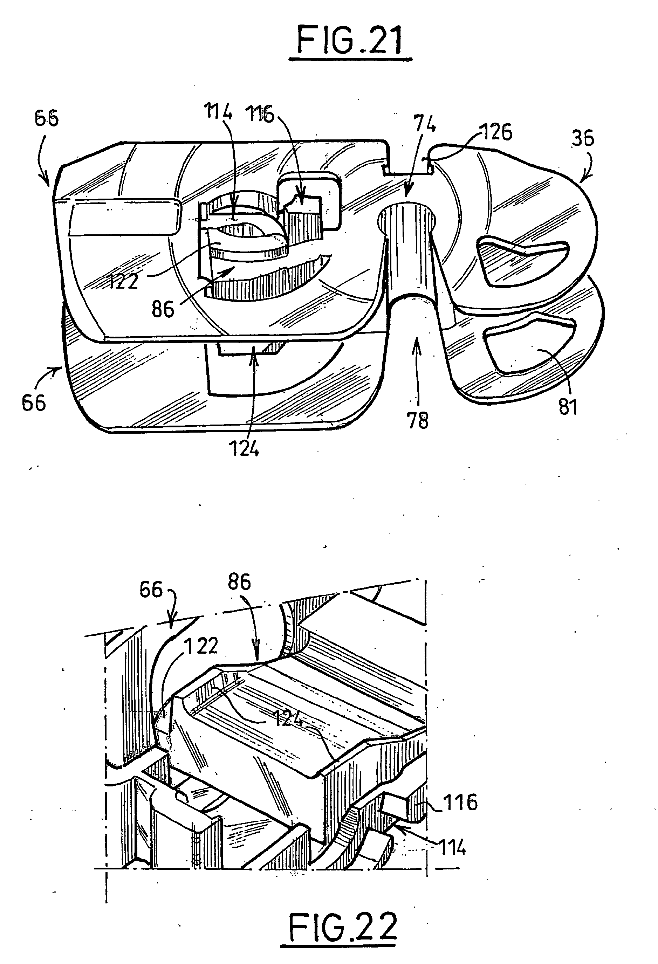

On a représenté aux figures 21 et 22 une autre variante de réalisation du connecteur 36 selon laquelle la fonction de positionnement des bossages 78b est réalisée par des nervures de positionnement 124 de la languette de blocage 86 qui s'étendent verticalement vers le bas le long de chaque bord latéral de la languette de blocage 86.

La distance entre les nervures de positionnement 124 est égale à la largeur L d'un bras de la troisième taille, c'est-à-dire égale à 8mm. De ce fait, lorsqu'un bras 32a de la troisième taille est en position montée avec le connecteur 36, la branche inférieure 60 du crochet en U est reçue entre les nervures de positionnement 124, et la face supérieure 60s est en appui contre la face inférieure 86i de la languette de blocage 86.

Le positionnement vertical et transversal du bras 32a de la troisième taille est réalisé par les nervures de positionnement 124 et par la languette de blocage 86.

Lorsqu'un bras 32b appartenant à la deuxième catégorie de bras est relié au balai d'essuyage 30, son axe transversal 62, que l'on appellera par la suite deuxième axe transversal, traverse un trou 82 de dimensions au moins égales, réalisé dans chaque aile longitudinale 40 de l'étrier principal 38, la face latérale 34a du bras 32b qui porte le deuxième axe d'articulation 62 venant en butée contre la face longitudinale verticale en vis-à-vis 40a d'une aile 40 de l'étrier 38.

Ainsi, le balai d'essuyage 30 est articulé par rapport au bras 32b autour d'un deuxième axe A' transversal défini par le deuxième axe 62 du bras 32b. Le connecteur 36 a alors uniquement pour fonction de verrouiller transversalement le deuxième axe 62 par rapport au balai d'essuyage 30.

Comme on peut le voir aux figures 2 et 2A, le corps 68 du connecteur 36 délimite un deuxième logement cylindrique 84 d'axe transversal à l'intérieur duquel le deuxième axe 62 peut être introduit transversalement. Le deuxième logement 84 du corps 68 est délimité en partie par la face inférieure 76i du tronçon arrière 76 du corps 68 qui comporte une portion concave 85, et est aussi délimité en partie par une languette de blocage 86 qui s'étend longitudinalement vers l'arrière depuis le tronçon avant 74 du corps 68, en vis-à-vis du tronçon arrière 76 du corps 36, dont la face supérieure 86s comporte une portion concave 88 en vis-à-vis de la portion concave 85 du tronçon arrière 76.

La languette de blocage 86 est déformable élastiquement de manière à s'escamoter pour permettre l'introduction du deuxième axe 62 dans le deuxième logement 84, et lorsque le deuxième axe 62 est en position montée dans le deuxième logement 84, elle est apte à exercer un effort de blocage qui tend à appuyer le deuxième axe 62 contre la face inférieure 76i du tronçon arrière 76 du corps 68.

Pour réaliser le verrouillage transversal du deuxième axe 62 par rapport au balai d'essuyage 30, le connecteur 36 comporte un élément de verrouillage qui est apte à être reçu en partie dans la gorge périphérique 64 du deuxième axe 62 lorsque celui-ci est en position montée dans le deuxième logement.

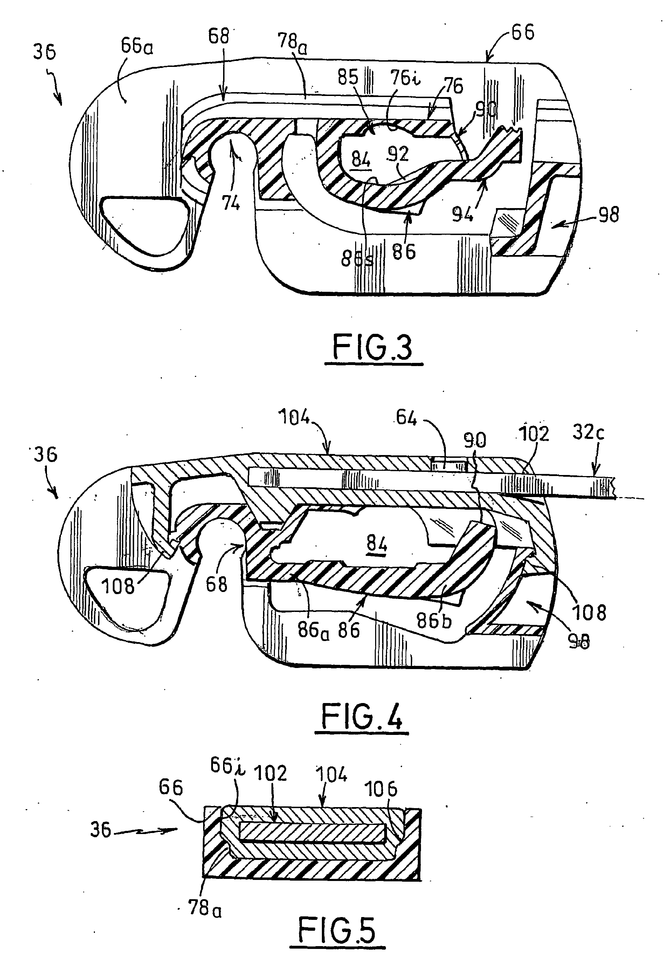

Selon un premier mode de réalisation, représenté à la figure 3, l'élément de verrouillage consiste en un ergot de verrouillage 92 qui est porté par la face supérieure 86s de la languette de blocage 86.

Selon un deuxième mode de réalisation non représenté, l'élément de verrouillage est porté par la face inférieure 76i du tronçon arrière 76 du corps 68.

Enfin, selon un troisième mode de réalisation du connecteur, représenté notamment aux figures 2 et 2A, du connecteur, l'élément de verrouillage consiste en une deuxième languette 114 qui est elle aussi déformable élastiquement et qui s'étend longitudinalement vers l'avant depuis l'extrémité longitudinale avant du tronçon arrière 76 du corps 68 du connecteur 36, et selon un mode de réalisation préféré, l'extrémité longitudinale avant 114a de la deuxième languette 114 est agencée longitudinalement en arrière du tronçon avant 74 du corps 36.

La deuxième languette 114 est déformable élastiquement de manière à s'escamoter vers le haut pour permettre l'introduction d'un deuxième axe 62 et de manière à se loger au moins en partie dans la gorge périphérique 64 du deuxième axe 62 pour réaliser le blocage transversal du deuxième axe 62, en association avec la languette de blocage 86.

Pour cela, la largeur transversale de la deuxième languette 114 est complémentaire de la largeur de la gorge annulaire 64 du deuxième axe 62.

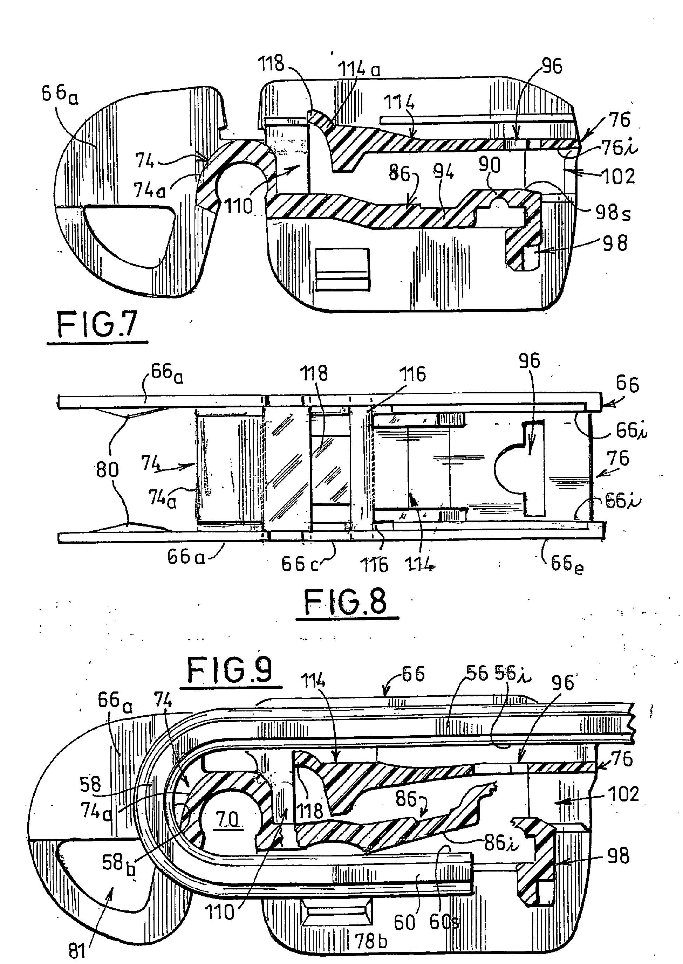

De plus, comme on l'a représenté aux figures 2 et 8, pour limiter la déformation de la deuxième languette 114 dans un plan horizontal, l'extrémité longitudinale avant 114a de la deuxième languette 114 comporte deux pions latéraux 116 agencés de part et d'autre de la deuxième languette 114 et qui s'étendent transversalement vers l'extérieur du connecteur 36 en traversant une ouverture 82 associé de chaque joue 66 du connecteur 36 de manière que l'extrémité transversale libre de chaque pion latéral 116 affleure avec la face verticale longitudinale externe 66e de la joue 66 associée.

Ainsi, lorsque le connecteur est en position montée au travers de l'ouverture 52 du dos 42 de l'étrier principal 38 du balai d'essuyage 30, l'extrémité libre de chaque pion latéral 116 est en butée contre la face longitudinale verticale interne d'une aile 40 de l'étrier principal 42 du balai d'essuyage 30, réalisant ainsi un verrouillage transversal de la deuxième languette 114.

Conformément à l'invention, et comme on l'a représenté aux figures, l'extrémité longitudinale arrière 86b de la languette de blocage 86 est normalement reliée au corps 68 par un film de matière 90.

Les caractéristiques mécaniques du film de matière 90, c'est-à-dire sa résistance à la rupture, sont déterminées de manière que l'introduction d'un deuxième axe 62 de la deuxième taille dans le deuxième logement 84 du connecteur 36 provoque une déformation élastique vers la bas de la languette de blocage 86 de grande amplitude, ce qui provoque la rupture du film de matière 90.

De plus, les caractéristiques mécaniques du film de matière 90 sont déterminées pour que l'introduction d'un deuxième axe 62 de la première taille dans le deuxième logement 84 ne provoque pas la rupture du film de matière 90, la languette de blocage 86 est alors reliée au corps 68 par ses deux extrémités 86a, 86b, réduisant ainsi son amplitude de mouvement.

Lorsque la languette de blocage 86 est reliée au corps 68 par ses deux extrémités longitudinales 86a, 86b, l'introduction d'un deuxième axe 62 de la première taille provoque une déformation de la languette de blocage 86 à chacune de ses extrémités 86a, 86b, ce qui se traduit par une raideur importante de la languette de blocage 86.

Ainsi, lorsqu'un deuxième axe 62 de la première taille est en position dans le deuxième logement 84, la languette de blocage 86 exerce un effort radial sur le deuxième axe 62 qui est plus important lorsqu'elle est reliée au corps 68 par ses deux extrémités 86a, 86b, par rapport au cas où elle est reliée au corps 68 par une seule extrémité 86a.

Quelle que soit la taille du deuxième axe 62, la languette de blocage 86 exerce un effort élastique sur le deuxième axe 62. cet effort élastique est suffisamment important pour empêcher qu'un effort transversal entre le bras 32b et le balai 30 ne provoque, par l'intermédiaire de l'élément de verrouillage, une déformation vers le bas de la languette de blocage 86, et donc la sortie de l'élément de verrouillage hors de la gorge 64 du deuxième axe 62.

Cependant, lorsque l'on souhaite désolidariser le balai d'essuyage 30 du bras d'essuie-glace 32b, il est nécessaire de déplacer transversalement le deuxième axe 62 dans le deuxième logement 84 du connecteur 36.

C'est pourquoi l'extrémité longitudinale arrière 86b de la languette de blocage 86 est prolongée par une patte de commande 94 du déblocage du deuxième axe 62 qui permet à un utilisateur de provoquer une déformation vers le bas de la languette de blocage 86, permettant ainsi à l'ergot de verrouillage 92, ou à la deuxième languette 114, de sortir de la gorge annulaire 64 du deuxième axe 62, de manière que le deuxième axe 62 ne soit plus verrouillé en mouvement transversal.

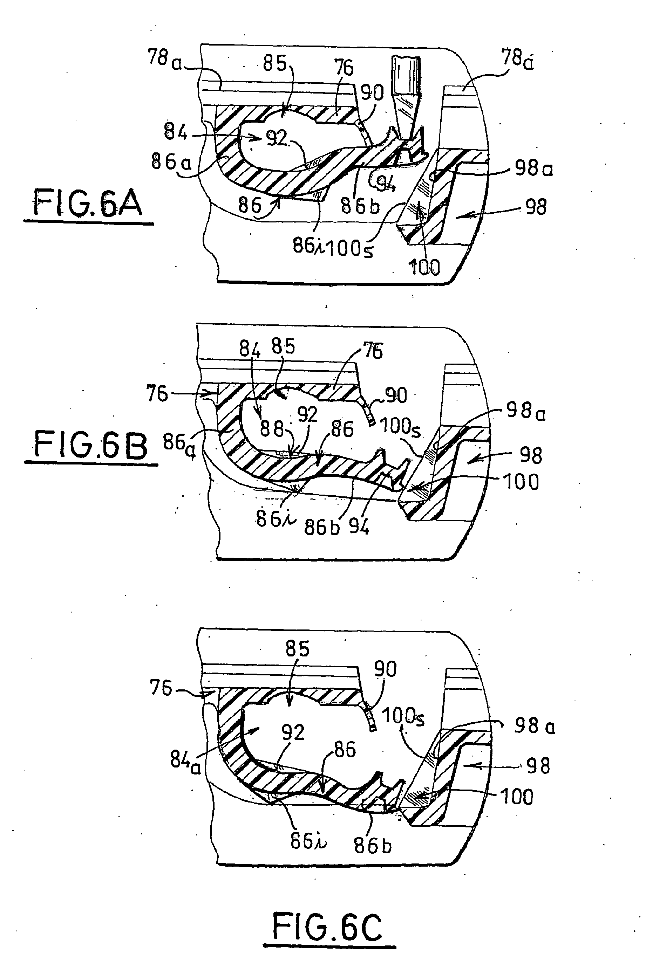

Comme on l'a représenté aux figures 6A à 6C, la patte de commande 94 s'étend longitudinalement vers l'arrière à partir de l'extrémité longitudinale arrière 86b de la languette de blocage 86, de manière qu'une action sur la patte de commande 94 consistant en un effort orienté globalement verticalement vers la bas provoque une déformation de la languette de blocage 86 vers le bas suffisamment important pour permettre la sortie de la languette de blocage 86 ou de l'ergot de verrouillage 92 de la gorge annulaire 64.

Lorsque le deuxième axe 62 qui est reçu dans le deuxième logement 84 du connecteur 36 est de la première taille, la languette de blocage 86 est alors reliée au corps 68 du connecteur 36 par ses deux extrémités 86a, 86b, une action sur la patte de commande 94 provoque alors la rupture du film de matière 90 pour permettre une déformation importante de la languette de blocage 86.

Pour accroître la rigidité du connecteur 36, comme représenté notamment aux figures 7 et 8, le tronçon arrière 76 du corps 68 du connecteur 36 s'étend longitudinalement vers l'arrière au-delà de la patte de commande 94, de manière à empêcher l'accès à celle-ci.

L'accès à la patte de commande 94 s'effectue alors par la partie inférieure du connecteur 36, ce qui peut s'avérer particulièrement inconfortable pour l'utilisateur.

C'est pourquoi, comme on l'a représenté notamment aux figures 2 et 2A, l'extrémité longitudinale avant libre 114a de la deuxième languette 114 est prolongée par un doigt 118 qui s'étend globalement vers le haut au-delà de la face supérieure du tronçon avant 74 du corps 68.

L'utilisateur peut alors se saisir du doigt 118 pour provoquer une déformation élastique vers le haut de la deuxième languette 114 jusqu'à sa sortie de la gorge 64 du deuxième axe 62.

Selon une autre variante de réalisation de l'invention, le corps 68 du connecteur 36 comporte un troisième tronçon inférieur arrière 98 qui permet d'une part d'accroître la rigidité du connecteur 36, et qui réalise d'autre part le blocage de la languette de blocage 86 dans deux positions représentées aux figures 6B et 6C, permettant chacune le blocage ou le démontage respectivement du deuxième axe 62.

Dans ce but, la face avant 98a du tronçon inférieur arrière comporte une nervure 100 qui s'étend longitudinalement vers l'avant et sur une face supérieure 100s de laquelle l'extrémité longitudinale arrière 86b de la languette de blocage 86 vient en butée lorsqu'un deuxième axe 62 de la deuxième dimension est introduit dans le deuxième logement 84. La languette de blocage 86 est alors verrouillé dans une première position de blocage du deuxième axe 62 dans laquelle le déplacement de l'extrémité longitudinale arrière 86b de la languette de blocage 86 est limité pour permettre d'exercer un effort radial sur le deuxième axe 62 plus important.

De plus, une action manuelle sur la patte de commande 94 provoque un déplacement plus important de l'extrémité longitudinale arrière 86b de la languette de blocage 86 qui vient se positionner au-dessous du tronçon inférieur arrière 98 du corps 68. La languette de blocage 86 est alors elle-même verrouillée dans une deuxième position permettant le démontage du deuxième axe 62.

Les parois longitudinales verticales de la gorge annulaire 64 forment généralement un angle droit avec la paroi cylindrique extérieure du deuxième axe 62. Ainsi, lorsque l'on désire introduire ou retirer le deuxième axe 62 du deuxième logement 84 du connecteur 36, le bord longitudinal de la languette de blocage 86 vient en butée contre une paroi verticale de la gorge 64, rendant l'introduction ou le retrait du deuxième axe 62 difficile.

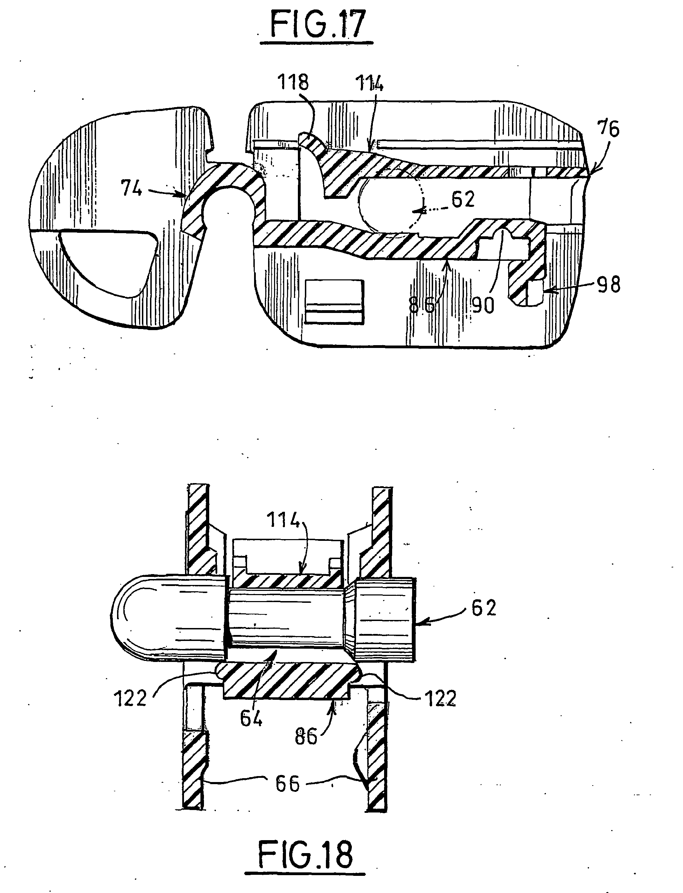

C'est pourquoi, selon une variante de réalisation de l'invention représentée à la figure 18, les bords latéraux de la languette de blocage 86 sont prolongés transversalement vers l'extérieur du connecteur 36 par des bossages arrondis 122 qui permettent de faciliter la déformation de la languette de blocage 86 lors de l'introduction ou l'extraction du deuxième axe 62.

Pour relier le balai d'essuyage 30 à un bras 32c appartenant à la troisième catégorie de bras, le connecteur 36 comporte un troisième logement 102 globalement cylindrique de section rectangulaire complémentaire à la section du bras 32c, d'axe principal longitudinal et qui est ouvert dans sa face arrière de manière que l'extrémité 34 du bras 32c puisse être introduite longitudinalement vers l'avant.

Selon un premier mode de réalisation de ce troisième logement cylindrique 102, représenté aux figures 4 et 5, celui-ci est réalisé dans une pièce rapportée 104 que l'on fixe au corps 68 du connecteur 36 par coopération de formes complémentaires.

Comme on peut le voir à la figure 5, les dimensions transversales de la pièce rapportée 104 sont complémentaires de celles du connecteur 36 de manière que la pièce rapportée 104 se loge sans jeu transversal entre les faces internes 66i des joues 66 du connecteur 36.

Aussi, la pièce rapportée 104 comporte des formes en relief 106 qui coopèrent avec des formes en relief 78a complémentaires du connecteur 36 pour le positionnement longitudinal et vertical de la pièce rapportée 104 sur le connecteur 36. Enfin, la pièce rapportée comporte des crochets 108 déformables élastiquement de blocage en position montée sur le corps 68 du connecteur 36.

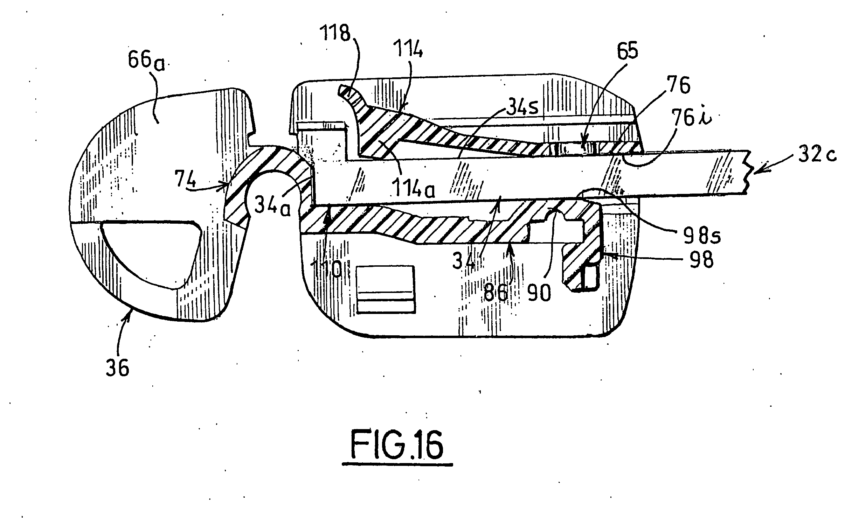

Selon un autre mode de réalisation du troisième logement 102, représenté notamment aux figures 7 et 16, celui-ci est réalisé dans le corps 68 du connecteur 36 de manière que chaque tronçon 74, 76, 98 du corps 68 délimite en partie le troisième logement 102.

Ainsi, le tronçon avant 74 du corps 68 comporte un évidement 110 d'axe longitudinal qui est débouchant dans sa face arrière de manière à réaliser l'extrémité avant du troisième logement 102. La face inférieure 76i du tronçon arrière 76 et la face supérieure 98s du tronçon inférieur arrière 98 du corps 68 comportent chacune une portion horizontale qui délimite une face supérieure ou inférieure, respectivement, du troisième logement 102.

Enfin, les faces longitudinales verticales internes en vis-à-vis 66i des joues 66 du connecteur 36 délimitent les parois latérales du troisième logement 102.

Selon un mode de réalisation connu, le blocage longitudinal d'un bras 32c appartenant à troisième catégorie de bras est réalisé par l'intermédiaire d'un ergot 65 faisant saillie vers le haut par rapport à la face supérieure 34s de l'extrémité 34 du bras 32c et qui est agencé longitudinalement à une distance standard de la face d'extrémité avant 34a du bras. Cet ergot 65 est reçu dans un orifice complémentaire 96 du connecteur.

D'une manière générale, le connecteur 36 est conçu avec des écarts dimensionnels pour permettre un montage du bras 32a, 32b, 32c sans difficultés importantes.

Cependant, une fois que le bras 32a, 32b, 32c est en position monté avec le connecteur 36, les écarts dimensionnels se traduisent par des jeux entre le connecteur 36 et le bras 32a, 32b, 32c qui sont la source, lors de l'utilisation de l'essuie-glace, de vibrations provoquant une usure prématurée de la raclette d'essuyage 50, ou bien de bruits désagréables.

C'est pourquoi il est prévu des moyens de rattrapage de jeux entre le bras 32a, 32b, 32c et le connecteur 36, qui permettent de limiter, voire de réduire ces vibrations.

Comme on peut le voir aux figures 9 et 13, un premier mode de réalisation de ces moyens de rattrapage de jeux consiste en une portion inférieure 86i de la languette de blocage 86 qui est recourbée vers le bas, de manière que lorsqu'un bras 32a appartenant à la première catégorie de bras est en position montée autour du corps 68 du connecteur 36, la languette de blocage 86 exerce un effort orienté vers le bas sur la face supérieure 60s du tronçon inférieur horizontal 60 du crochet en U.

Ainsi, pour la première taille, c'est-à-dire ici (9 ; 3 ; 6.7), comme on l'a représenté à la figure 9, le film de matière 90 est rompu et la languette de blocage 86 est déformée élastiquement vers le haut de manière à exercer un effort de rappel élastique vers la bas sur la face supérieure 60s du tronçon inférieur horizontal 60 du crochet en U.

Pour la troisième taille de bras, c'est-à-dire (8 ; 3 ; 6.7), comme on l'a représenté à la figure 13, le film de matière 90 ne s'est pas rompu et la languette de blocage 86 est légèrement déformée élastiquement vers le haut de manière à exercer un effort de rappel élastique vers la bas sur la face supérieure 60s du tronçon inférieur horizontal 60 du crochet en U.

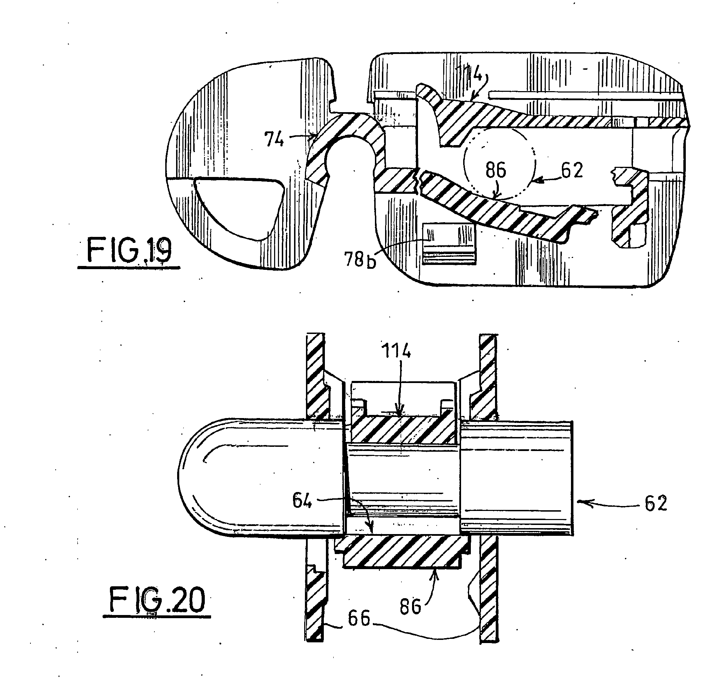

Selon un autre mode de réalisation de l'invention, représenté aux figures 7 à 20, les moyens de rattrapage de jeux sont réalisés par l'intermédiaire de la deuxième languette 114 qui est elle aussi déformable élastiquement.

L'extrémité longitudinale avant 114a de la deuxième languette 114 est recourbée vers le bas de manière que lorsque l'extrémité 34 d'un bras 32c appartenant à la troisième catégorie de bras est en position montée dans le troisième logement 102 du corps 68, l'extrémité avant libre 114a de la deuxième languette 114 est en contact avec la face supérieure 34s de l'extrémité 34 du bras 32c, et la deuxième languette 114 est déformée vers le haut.

La déformation vers le haut de la deuxième languette 114 est limitée par le fait que les pions latéraux 116 viennent en butée verticalement vers le haut contre un bord supérieur 82a de l'ouverture 82.

Ainsi, comme on l'a représenté à la figure 16, la deuxième languette 114 exerce un effort de rappel orienté globalement vers le bas sur la face supérieure 34s de l'extrémité 34 du bras 32c, permettant ainsi de réaliser un rattrapage de jeux entre le connecteur 36 et un bras 32c appartenant à la troisième catégorie de bras, et d'empêcher un pivotement du bras 32c par rapport au connecteur 36.

Le doigt 118 de la deuxième languette 114 permet lui aussi de réaliser le rattrapage de jeux en venant en appui contre la face longitudinale inférieure 56i de la branche supérieure 56 du crochet en U d'un bras 32a appartenant à la première catégorie de bras, et pour au moins une des trois tailles de bras 32a.

Ainsi, comme on l'a représenté aux figures 9, 11 et 13, lorsque l'extrémité 34 d'un bras 32a appartenant à la première catégorie de bras est en position montée autour du corps 68 du connecteur 36, la deuxième languette 114 est déformée élastiquement vers le bas, et elle exerce, par l'intermédiaire du doigt 118, un effort de rappel orienté globalement vers le haut sur la face inférieure 56i du tronçon supérieur horizontal 56 de l'extrémité 34 du bras 32a, permettant ainsi de réaliser le rattrapage de jeux.

Comme on l'a dit plus haut, la deuxième languette 114 est apte à se déformer vers le haut ou vers le bas en fonction de la catégorie de bras 32a, 32b, 32c. Pour que cela soit possible, les ouvertures 82 des joues 66, qui sont traversés par les pions 116 de la deuxième languette 114, s'étendent verticalement de manière à autoriser un déplacement vertical vers le haut et vers le bas des pions 116 lors de l'introduction de l'extrémité 54 d'un bras 32a, 32b, 32c.

Cependant, pour limiter l'amplitude du déplacement vers le haut de la deuxième languette 114, lors de l'introduction d'un bras 32b appartenant à la deuxième catégorie de bras, les ouvertures 82 des joues 66 sont dimensionnées de manière que les pions 116 de la deuxième languette 114 viennent verticalement en butée vers le haut contre les bords supérieurs 82a respectifs de l'ouverture 82 associée.

Ainsi, les déformations de la deuxième languette 114 restent inférieures à la limite d'élasticité du matériau, ce qui permet d'utiliser de nouveau le connecteur pour relier le bras 32c à un balai 30 neuf.

On a décrit les joues 66 du connecteur 36 comme comportant chacune deux ouvertures 82 qui sont traversées respectivement par le deuxième axe 62 d'un bras 32b appartenant à la deuxième catégorie de bras, et par un pion latéral 116 de la deuxième languette 114. Cependant, il sera compris que chaque joue 66 peut ne comporter qu'une seule ouverture 82 qui consiste en la réunion des ouvertures décrites précédemment.

Lors du fonctionnement du mécanisme d'essuyage, et lorsqu'un bras 32b de la deuxième catégorie est relié au balai 30 par l'intermédiaire du connecteur 36, le deuxième axe 62 pivote dans le deuxième logement 84.

Le deuxième axe 62 de la deuxième taille est de dimensions importantes, sa surface périphérique est donc elle aussi importante. Ainsi, lors de son mouvement dans le deuxième logement 84, les frottements entre le deuxième axe 62 et les parois associés du connecteur 36 provoquent une usure importante de ces parois associées.

Cette usure est la source de jeux importants entre le deuxième axe 62 et le connecteur 36 qui peuvent occasionner une sortie de l'élément de verrouillage hors de la gorge 64 du deuxième axe 62 et donc une désolidarisation du bras 32b et du balai 30.

Conformément à une autre variante de réalisation de l'invention, et comme on l'a représenté aux figures 22 à 26, les surfaces de contact entre le connecteur 36 et un deuxième axe 62 de la deuxième taille sont plus importantes que les surfaces de contact entre le connecteur 36 et un deuxième axe 62 de la première taille.

Selon un premier aspect de réalisation de cette variante, les surfaces de contact sont augmentée au niveau de la languette de blocage 86.

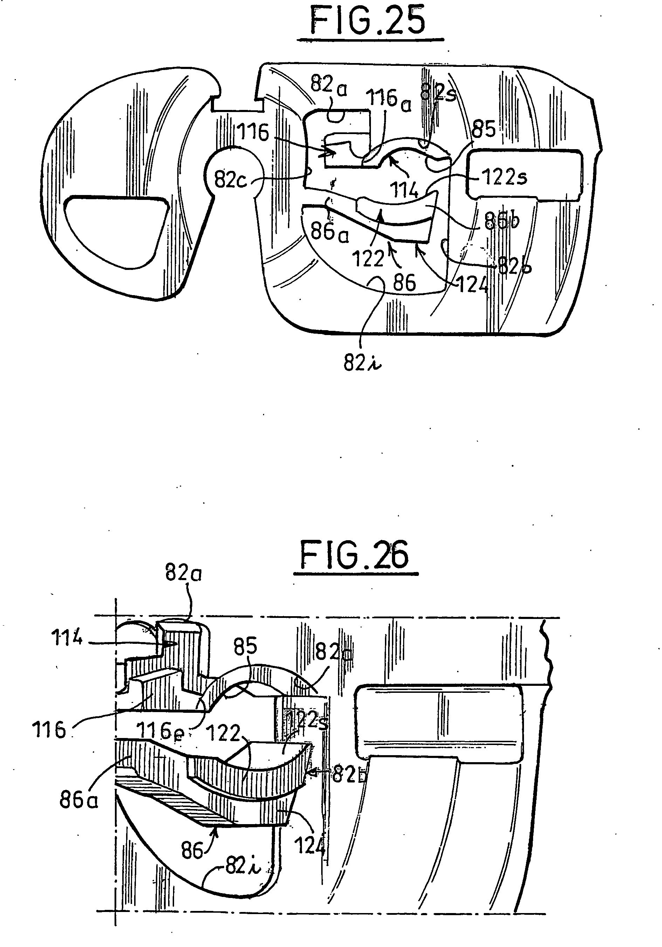

Pour cela, comme on peut le voir à la figure 25, la face supérieure 86s de la languette de blocage 86 est convexe et elle est complémentaire à la surface cylindrique externe du deuxième axe 62.

Aussi, les bossages 122 de la languette de blocage 86 s'étendent transversalement de manière que leur extrémité transversale libre affleure avec la face longitudinale verticale externe 66e de la joue 66 associée. De plus, les bossages 122 sont cintrés de manière que leur face supérieure 122s soit elle aussi complémentaire à la surface cylindrique externe du deuxième axe 62.

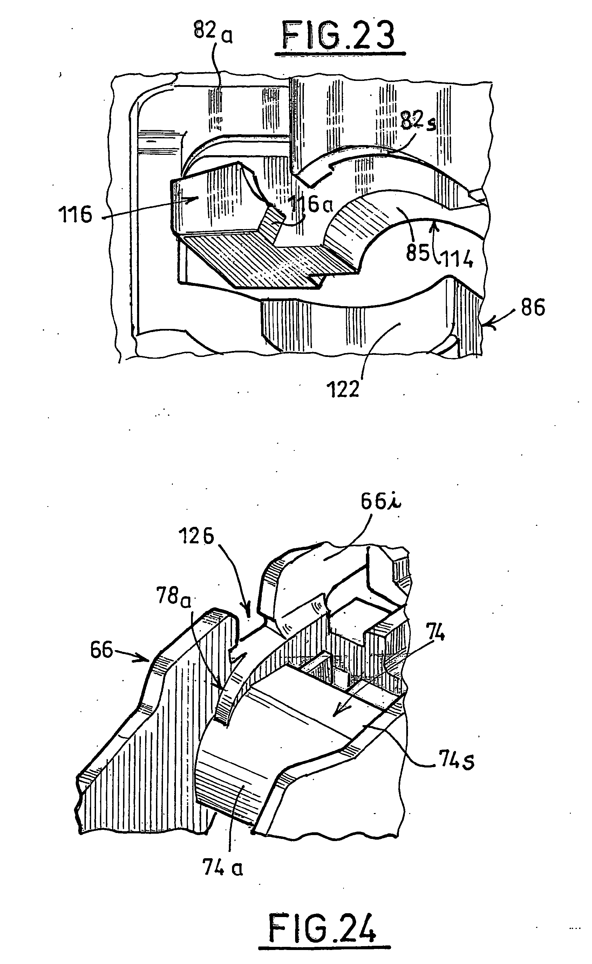

Une autre surface de contact entre le deuxième axe 62 et le connecteur 36 est située à un bord supérieur 82s de l'ouverture 82 de chaque joue 66. ainsi, comme on l'a représenté aux figures 22 et 23, le bord supérieur 82s de chaque ouverture 82 contre lequel le deuxième axe 62 s'appuie est lui aussi cintré de manière à être complémentaire à la surface cylindrique externe du deuxième axe 62.

Enfin, comme on peut le voir plus en détail à la figure 23, les pions latéraux 116 de la deuxième languette 114 comportent aussi une surface d'appui 116a contre la surface cylindrique externe d'un deuxième axe 62 de la deuxième taille qui est complémentaire à la surface cylindrique externe du deuxième axe 62.

L'ensemble de ces faces permet ainsi de réduire la pression entre le deuxième axe 62 et le connecteur 36, et donc de limiter l'usure du connecteur.

L'ouverture 82 de chaque joue 66 est donc délimité par plusieurs bords qui ont chacun une utilité pour le fonctionnement du connecteur 36.

Ces bords consistent en :
- un premier bord supérieur 82a, situé à l'avant de l'ouverture 82, a pour fonction de butée du pion latéral 116 associé de la deuxième patte 114 ;
- un deuxième bord supérieur 82s, situé à l'arrière de l'ouverture 82, et à une cote verticale par rapport au connecteur 36 inférieure à la cote verticale du premier bord supérieur ; Ce deuxième bord est cintré de manière à former une surface complémentaire à la surface cylindrique externe d'un deuxième axe 62 de la deuxième taille, pour limiter l'usure du connecteur 36 ;
- un bord vertical arrière 82b contre lequel s'appuie la surface cylindrique externe d'un deuxième axe 62 de la deuxième taille pour le positionnement du deuxième axe 62 ;
- un bord inférieur 82i et un bord avant 82c contre lesquels les bossages 122 de la languette de blocage viennent en butée pour délimiter le débattement de la languette de blocage 86.

Un connecteur 36 conforme à l'invention permet à un utilisateur de relier un balai 30 à un bras d'entraînement 32a, 32b, 32c, sans avoir à se demander si le connecteur est effectivement adapté au type de bras.

Puisque ce connecteur 36 est indifférent du type de bras, il peut alors être monté sur le balai 30 avant sa livraison. Le montage du connecteur 36 avec le balai 30 nécessite des moyens pour sa préhension par un élément de manoeuvre.

Ces moyens de préhension comportent d'une part l'orifice 96 qui est apte à recevoir un doigt de centrage (non représenté) de l'élément de manoeuvre, et ils comportent d'autre part une rainure 126 réalisée dans chaque joue 66, qui s'étend verticalement vers le bas depuis le bord supérieur de la joue 66.

Pour permettre une manipulation du connecteur 36, la rainure 126 a la forme d'un "T" inversé, c'est-à-dire que la branche horizontale du "T" est située dessous la branche verticale. Chaque rainure 126 est apte à recevoir un deuxième doigt (non représenté) de forme complémentaire pour la manipulation du connecteur 36.

De plus chaque rainure 126 est agencée longitudinalement de manière que son plan transversal vertical de symétrie soit à la même cote longitudinale que l'axe transversal A. Ainsi, lors du montage du connecteur 36 sur le balai 30, c'est-à-dire lors de l'insertion du premier axe d'articulation 54 dans le premier logement cylindrique 70, le deuxième doigt de l'élément de manoeuvre exerce un effort vertical d'insertion qui est centré sur l'axe transversal A d'articulation, et donc qui limite les déformations potentielles du connecteur qui pourraient l'endommager.

Selon un premier mode de réalisation de ces rainures 126, représenté à la figure 2, le bord inférieur de la branche horizontale de chaque rainure 126 affleure avec la face supérieure 74s de l'élément avant 74 du corps 68, ce qui permet d'exercer un effort d'insertion sur une surface horizontale plus importante.

Selon un deuxième mode de réalisation de ces rainures 126, représenté à la figure 24, le bord inférieur de la branche horizontale de chaque rainure 126 s'étend au-dessus de la face supérieure 74s de l'élément avant 74 du corps 68. Ainsi, la nervure 78a associée peut s'étendre longitudinalement vers l'avant jusqu'à l'extrémité avant du tronçon avant 74 du corps 68, permettant de ce fait d'augmenter la surface de support de la branche supérieure 56 du crochet en U.

Il sera aussi compris que des inversions mécaniques simples peuvent constituer des variantes de réalisation de l'invention. Par exemple, la languette de blocage 86 peut s'étendre longitudinalement vers l'avant depuis le tronçon inférieur arrière 98 et être reliée au tronçon avant 74 par l'intermédiaire du film de matière 90. De même, la deuxième languette 114 peut s'étendre longitudinalement vers l'arrière depuis le tronçon avant 74, sans sortir du domaine technique de l'invention.

Enfin, le connecteur 36 a été décrit comme permettant de relier un bras d'essuie-glace 32a, 32b, 32c à un balai d'essuyage 30 comportant une structure articulée, il sera compris qu'un connecteur 36 conforme à l'invention peut aussi relier un bras 32a, 32b, 32c à un balai 30 dont la structure articulée est replacée par des vertèbres, aussi appelé "flat-blade".

## Revendications

1. Connecteur (36) pour relier une extrémité d'un bras d'essuie-glace (32a, 32b, 32c) à un premier axe transversal d'articulation (54) appartenant à un élément de structure (38) d'un balai d'essuyage (30), du type comportant deux joues (66) latérales verticales parallèles qui sont reliées entre-elles par un corps (68) délimitant un premier logement (78) dans lequel le premier axe d'articulation (54) peut être introduit radialement, du type :
- qui est apte à être reçu au moins en partie dans le fond de l'extrémité (34) d'un bras (32a), qui appartient à une première catégorie de bras en forme de crochet en U, par l'intermédiaire d'une portion de face cylindrique convexe externe (74a) du corps (68) et par l'intermédiaire de formes en relief (78) agencées sur les faces longitudinales verticales internes (66i) en vis-à-vis des joues (66) latérales, de sorte que le connecteur (36) soit apte à être reçu dans le fond d'extrémités (34) de bras (32a) appartenant à la première catégorie de bras de différentes tailles, et
- qui est apte à recevoir un deuxième axe transversal (62), qui appartient à une deuxième catégorie de bras (32b) et qui s'étend transversalement depuis un bord latéral (34a) de l'extrémité (34) du bras (32b), dans un deuxième logement (84) cylindrique du corps (68) à l'intérieur duquel le deuxième axe (62) peut être introduit transversalement, et qui est délimité en partie par une languette de blocage (86) déformable élastiquement qui s'étend globalement longitudinalement, dont une première extrémité longitudinale (86a) est fixée au corps (68), et qui est apte à s'escamoter pour permettre l'introduction du deuxième axe (62) et provoquer le blocage transversal du deuxième axe (62) en position montée dans le deuxième logement (84),
**caractérisé en ce que** la deuxième extrémité longitudinale (86b) de la languette de blocage (86) est normalement reliée au corps (68) par un film de matière (90), et **en ce que** les dimensions du film (90) sont déterminées de manière que le deuxième logement (84) soit apte à recevoir un deuxième axe (62) pouvant avoir une première ou une deuxième taille, la deuxième taille étant supérieure à la première taille, et l'introduction d'un deuxième axe (62) de la deuxième taille provoque la rupture du film de matière (90).

2. Connecteur (36) selon l'une quelconque des revendications précédentes, **caractérisé en ce que** le corps (68) comporte un tronçon avant (74) qui délimite le premier logement (78), dont la paroi externe avant (74a) est apte à être reçue dans le fond du crochet en U du bras (32a) et un tronçon arrière (76) qui s'étend horizontalement au-dessus de la languette de blocage (86), dont la face supérieure horizontale (76s) définit une face d'appui d'une branche supérieure (56) du crochet en U, et dont la face inférieure (76i) comporte une portion concave (85) qui délimite en partie le deuxième logement (84), en association avec une portion concave (88) en vis-à-vis de la face supérieure (86s) de la languette de blocage (86).

3. Connecteur (36) selon l'une quelconque des revendications précédentes, **caractérisé en ce qu'**il comporte un élément de verrouillage qui est apte à être reçu dans une gorge annulaire (64) formée dans la paroi cylindrique d'un deuxième axe (62), de première ou de deuxième taille, pour le blocage transversal du deuxième axe (62) en position montée dans le deuxième logement (84).

4. Connecteur (36) selon la revendication précédente, **caractérisé en ce que** la languette de blocage (86) exerce un effort élastique de blocage sur le deuxième axe (62), pour empêcher la sortie de l'élément de verrouillage hors de la gorge annulaire (64).

5. Connecteur (36) selon l'une des revendications 3 ou 4, **caractérisé en ce que** l'élément de verrouillage consiste en un ergot (92) qui est porté par la languette de blocage (86).

6. Connecteur (36) selon la revendication précédente, **caractérisé en ce que** la deuxième extrémité longitudinale (86b) de la languette de blocage (86) est prolongée par une patte de commande (94) du déblocage du deuxième axe (62).

7. Connecteur (36) selon l'une des revendications 3 ou 4, **caractérisé en ce que** l'élément de verrouillage consiste en un ergot qui est porté par le corps (68).

8. Connecteur (36) selon l'une des revendications 3 ou 4, **caractérisé en ce que** l'élément de verrouillage consiste une deuxième languette (114) déformable élastiquement qui s'étend globalement longitudinalement vers l'avant depuis l'extrémité longitudinale avant (76a) du tronçon arrière (76) du corps (68), et qui est apte à s'escamoter vers le haut pour permettre l'introduction du deuxième axe (62) et qui est apte à se loger au moins en partie dans la gorge périphérique (64) du deuxième axe (62) pour réaliser le blocage transversal du deuxième axe (62), en association avec la languette de blocage (86).

9. Connecteur (36) selon la revendication précédente, **caractérisé en ce que** la deuxième languette (114) est de largeur transversale complémentaire de la largeur de la gorge annulaire (64) du deuxième axe (62).

10. Connecteur (36) selon l'une quelconque des revendications 2 à 9, **caractérisé en ce que** l'extrémité longitudinale avant (86a) de la languette de blocage (86) est fixée au tronçon avant (74).

11. Connecteur (36) selon l'une quelconque des revendications 2 à 10, **caractérisé en ce que** le corps (68) comporte aussi un tronçon inférieur arrière (98) dont une face avant (98a) comporte une nervure (100) qui est apte à coopérer avec la patte de déblocage (94) pour maintenir la languette de blocage (86) dans une position d'ouverture du deuxième logement (84).

12. Connecteur selon la revendication précédente, **caractérisé en ce que** le tronçon inférieur arrière (98) comporte une face inférieure (98i) d'appui d'une face supérieure (60s) d'un tronçon inférieur horizontal (60) de l'extrémité (34) d'un bras (32a) appartenant à la première catégorie de bras.

13. Connecteur (36) selon l'une quelconque des revendications précédentes, **caractérisé en ce qu'**il est apte à recevoir l'extrémité (34) d'une troisième catégorie de bras (32c), qui consiste en un tronçon de profilé qui s'étend globalement longitudinalement vers l'avant, dans un troisième logement (102) cylindrique d'axe principal longitudinal et qui est ouvert dans sa face arrière.

14. Connecteur (36) selon la revendication précédente, **caractérisé en ce que** le troisième logement (102) est réalisé dans une pièce rapportée (104) au connecteur (36) qui est apte à être fixée au connecteur (36) par coopération de formes complémentaires (106, 108).

15. Connecteur (36) selon l'une quelconque des revendications 2 à 13, **caractérisé en ce que** le tronçon avant (74) du corps (68) comporte un évidement (110) d'axe longitudinal qui est débouchant dans sa face arrière et qui forme l'extrémité avant du troisième logement (102), et **en ce que** la face inférieure (76i) du tronçon arrière (76) et la face supérieure (98s) du tronçon inférieur arrière (98) du corps (68) délimitent, en combinaison avec les faces longitudinales verticales internes des joues (66) latérales, un tronçon arrière du troisième logement (102).

16. Connecteur (36) selon l'une quelconque des revendications précédentes, en combinaison avec la revendication 2, **caractérisé en ce que** l'extrémité (34) d'un bras (32c) appartenant à la troisième catégorie de bras comporte un ergot (65) qui fait saillie vers le haut par rapport à la face supérieure (34s) de l'extrémité (34) du bras (32c), et qui est apte à être reçu dans un orifice vertical (96) du tronçon arrière (76) pour le blocage longitudinal de l'extrémité (34) du bras (32c) en position montée dans le troisième logement (102).

17. Connecteur (36) selon l'une quelconque des revendications précédentes, **caractérisé en ce qu'**une portion (86i) de la languette de blocage (86) est recourbée vers la bas de manière que, pour au moins une taille d'un bras (32a) appartenant à la première catégorie de bras, et lorsque le bras (32a) est en position montée, le film de matière (90) est rompu et la languette de blocage (86) est déformée élastiquement vers le haut de manière à exercer un effort globalement vertical vers le bas sur la face supérieure (60s) d'un deuxième tronçon inférieur horizontal (60) de l'extrémité (34) du bras (32a).

18. Connecteur selon la revendications précédente, **caractérisé en ce que**, pour au moins une deuxième taille de bras (32a) appartenant à la première catégorie de bras, le film de matière relie la deuxième extrémité longitudinale (86b) de la languette de blocage (86) au corps (68), de manière à exercer un effort globalement vertical vers le bas sur la face supérieure (60s) d'un deuxième tronçon inférieur horizontal (60) de l'extrémité (34) du bras (32a).

19. Connecteur (36) selon l'une quelconque des revendications précédentes, **caractérisé en ce que** les bords latéraux de la languette de blocage (86) sont prolongés transversalement vers l'extérieur par des bossages arrondis (122).

20. Connecteur (36) selon l'une quelconque des revendications 7 à 19, **caractérisé en ce que** la deuxième languette (114) comporte deux pions latéraux (116) agencés de part et d'autre de l'extrémité longitudinale avant (114a) de la deuxième languette (114) qui s'étendent transversalement vers l'extérieur du connecteur (36) et qui traversent un orifice (84) de la joue (66) latérale associée de manière que l'extrémité libre de chaque pion (116) affleure avec la face verticale externe (66e) de la joue (66) associée.

21. Connecteur (36) selon la revendication précédente, **caractérisé en ce que** lorsqu'un bras (32c) appartenant à la troisième catégorie de bras est en position montée dans le troisième logement (102), les pions latéraux (116) sont en butée verticale contre un bord supérieur (82a) de l'orifice (82) de la joue (66) associé.

22. Connecteur (36) selon l'une des revendications 7 à 21, **caractérisé en ce que** l'extrémité avant libre (114a) de la deuxième languette (114) est recourbée vers le bas de manière que lorsque l'extrémité (34) d'un bras (32c) appartenant à la troisième catégorie de bras est introduite dans le troisième logement - (102), la deuxième languette (114) est déformée élastiquement vers le haut, et l'extrémité avant libre (114a) de la deuxième languette (114) exerce un effort de rappel orienté globalement vers le bas sur la face supérieure (34s) de l'extrémité (34) du bras (32c).

23. Connecteur (36) selon l'une quelconque des revendications 7 à 22, **caractérisé en ce que** l'extrémité avant libre (114a) de la deuxième languette (114) est prolongée vers le haut par un doigt (118) de manière que lorsque l'extrémité (34) d'un bras (32a) appartenant à la première catégorie de bras est en position montée, la deuxième languette (114) est déformée élastiquement vers le bas et exerce par l'intermédiaire du doigt (118), un effort de rappel orienté globalement vers le haut, sur une face inférieure (56i) d'un premier tronçon supérieur (56) horizontal de l'extrémité (34) du bras (32a).

24. Connecteur (36) selon l'une quelconque des revendications précédentes, **caractérisé en ce que** le tronçon d'extrémité (66a) avant de chaque joue (66), qui s'étend longitudinalement en porte-à-faux en avant du corps (68) est déformable élastiquement et comporte, sur sa face longitudinale verticale interne (66i) une butée (80) formant rampe, de manière à s'escamoter lors de l'introduction de l'extrémité (34) d'un bras 32a) appartenant à la première catégorie de bras, et de manière à réaliser le blocage en position montée du crochet en U autour du corps (68) du connecteur (36).

25. Connecteur (36) selon la revendication précédente, **caractérisé en ce que** la butée (80) formant rampe s'étend sur une portion supérieure du tronçon d'extrémité avant (66a) de la joue (66) associée et **en ce qu'**une portion inférieure du tronçon d'extrémité avant (66a) comporte une ouverture (81) d'introduction du crochet en U.

26. Connecteur (36) selon l'une quelconque des revendications précédentes, en combinaison avec la revendication 2, **caractérisé en ce que** les formes en relief (78) comportent une nervure (78a) agencée sur la face longitudinale verticale interne (66i) de chaque joue (66) du connecteur (36) qui s'étend longitudinalement au-dessus de la face supérieure (76s) du tronçon arrière (76) du corps (68) pour le positionnement d'une extrémité (34) de bras (32a) appartenant à la première catégorie de bras.

27. Connecteur (36) selon la revendication précédente, **caractérisé en ce que** les nervures (78a) sont réalisées de manière que leur face supérieure forment chacune une surface d'appui vertical de la branche supérieure (56) du crochet en U d'au moins une première taille de bras, et de manière que leurs faces verticales en vis-à-vis réalisent le positionnement transversal de la branche supérieure (56) du crochet en U d'un bras (32a) d'une deuxième taille.

28. Connecteur (36) selon l'une quelconque des revendications précédentes, en combinaison avec la revendication 2, **caractérisé en ce que** les formes en relief comportent un deuxième bossage (78b) agencé verticalement au-dessous du corps (68) pour réaliser au moins en partie le positionnement du connecteur (36) dans le fond d'une extrémité (34) de bras (32a) appartenant à la première catégorie de bras.

29. Connecteur (36) selon la revendication précédente, **caractérisé en ce que** le deuxième bossage (78b) est réalisé de manière que sa face supérieure réalise le positionnement vertical du connecteur (36) pour une première taille de bras (32a), sa face inférieure réalise le positionnement vertical du connecteur (36) pour une deuxième taille de bras (32a), et sa face verticale interne réalise le positionnement transversal du connecteur (36) pour une troisième taille de bras (32a).

30. Connecteur (36) selon l'une quelconque des revendications précédentes, **caractérisé en ce que** la face inférieure de la languette de blocage (86) comporte des nervures (124) de positionnement vertical et/ou transversal d'un bras (32a) de la première catégorie d'au moins une taille.

31. Connecteur (36) selon la revendication précédente, **caractérisé en ce que** chaque nervure de positionnement (124) s'étend globalement verticalement vers le bas le long d'un bord latéral de la face inférieure (86i) de la languette de blocage (86).

32. Connecteur (36) selon l'une quelconque des revendications précédentes, en combinaison avec la revendication 19, **caractérisé en ce que** les bossages (122) de la languette de blocage (86) s'étendent transversalement de manière que l'extrémité transversale libre de chaque bossage (122) affleure avec la face verticale externe (66e) de la joue (66) associée.

33. Connecteur (36) selon la revendication précédente, **caractérisé en ce que** chaque bossage (122) est cintré de manière que la courbure de sa face supérieure (122s) soit globalement complémentaire à la paroi cylindrique externe d'un deuxième axe (62) de la deuxième taille.

34. Connecteur (36) selon la revendication précédente, **caractérisé en ce que** la courbure d'un bord supérieur de l'ouverture (82) est sensiblement identique à la courbure de la paroi cylindrique externe d'un deuxième axe (62) de la deuxième taille.

35. Connecteur (36) selon l'une quelconque des revendications précédentes, en combinaison avec la revendication 20, **caractérisé en ce que** les pions latéraux (116) comportent chacun une surface d'appui contre la surface cylindrique externe d'un deuxième axe (62) de la deuxième taille qui est complémentaire à cette paroi cylindrique externe.

36. Connecteur (36) selon l'une quelconque des revendications précédentes, **caractérisé en ce que** chaque joue (66) comporte une rainure (126) qui s'étend verticalement vers le bas depuis le bord supérieur de la joue (66) associée et qui est complémentaire à un élément de manoeuvre du connecteur (36).

37. Connecteur (36) selon la revendication précédente, en combinaison avec la revendication 2, **caractérisé en ce que** la rainure (126) forme globalement un T inversé dont le bord inférieur de la branche horizontale s'étend verticalement au-dessus de la face supérieure (74s) de l'élément avant (74) du corps (68) du connecteur (36).

38. Connecteur (36) selon la revendication précédente, en combinaison avec la revendication 26, **caractérisé en ce que** les nervures (78a) s'étendent longitudinalement vers l'avant de manière à s'étendre jusqu'à l'extrémité avant du tronçon avant (74) du corps (68) du connecteur.

## Claims

1. A connector (36) for connecting one end of a windshield wiper arm (32a, 32b, 32c) to a first transverse hinge pin (54) belonging to a structure element (38) of a wiper blade assembly (30), the connector being of the type having two parallel vertical side cheek plates (66) that are interconnected by a body (68) defining a first recess (78) into which the first hinge pin (54) can be inserted radially, the connector being of the type:
- that is suitable for being received at least in part against the inside end wall of the end (34) of an arm (32a) that belongs to a first category of arm, which end is in the form of a U-shaped hook, via an outside convex cylindrical face portion (74a) of the body (68) and via shapes in relief (78) provided on the facing inside vertical longitudinal faces (66i) of the side cheek plates (66), so that the connector (36) is suitable for being received against the inside end walls of ends (34) of arms (32a) belonging to the first category of arm and of different sizes; and
- that is suitable for receiving a second transverse pin (62) that belongs to a second category of arm (32b) and that extends transversely from a side edge (34a) of the end (34) of the arm (32b) in a second cylindrical recess (84) of the body (68) into which recess the second pin (62) can be inserted transversely, which recess is defined in part by a locking tongue (86) that is elastically deformable and that extends substantially longitudinally, a first longitudinal end (86a) of which tongue is fastened to the body (68), the locking tongue being suitable for retracting and for enabling the second pin (62) to be inserted, and for causing the second pin (62) to be locked transversely in the position in which it is mounted in the second recess (84);
said connector being **characterized in that** the second longitudinal end (86b) of the locking tongue (86) is normally connected to the body (68) by a film of material (90), and **in that** the dimensions of the film (90) are determined so that the second recess (84) is suitable for receiving a second pin (62) that can be of a first or of a second size, the second size being greater than the first size, and inserting a second pin (62) of the second size causes the film of material (90) to break.

2. A connector (36) according to any preceding claim, **characterized in that** the body (68) includes a front segment (74) that defines the first recess (78), the front outside wall (74a) of the front segment being suitable for being received against the inside end wall of the U-shaped hook of the arm (32a), and a rear segment (76) that extends horizontally above the locking tongue (86), and whose horizontal top face (76s) defines a bearing face for bearing against a top branch (56) of the U-shaped hook, and whose bottom face (76i) is provided with a concave portion (85) that defines in part the second recess (84), in association with a facing concave portion (88) of the top face (86s) of the locking tongue (86).

3. A connector (36) according to any preceding claim, **characterized in that** it includes a locking element that is suitable for being received in an annular groove (64) formed in the cylindrical wall of a second pin (62) of the first size or of the second size for locking the second pin (62) transversely in the position in which it is mounted in the second recess (84).

4. A connector (36) according to the preceding claim, **characterized in that** the locking tongue (86) exerts a resilient locking force on the second pin (62) so as to prevent the locking element from disengaging from the annular groove (64).

5. A connector (36) according to claim 3 or claim 4, **characterized in that** the locking element consists of a lug (92) that is carried by the locking tongue (86).

6. A connector (36) according to the preceding claim, **characterized in that** the second longitudinal end (86b) of the locking tongue (86) is extended by a control tab (94) for releasing the second pin (62).

7. A connector (36) according to claim 3 or claim 4, **characterized in that** the locking element consists of a lug that is carried by the body (68).

8. A connector (36) according to claim 3 or claim 4, **characterized in that** the locking element consists of a second tongue (114) that is elastically deformable and that extends substantially longitudinally forwards from the front longitudinal end (76a) of the rear segment (76) of the body (68), which tongue is suitable for retracting upwards to enable the second pin (62) to be inserted, and is suitable for being received at least in part in the peripheral groove (64) in the second pin (62) so as to lock the second pin (62) transversely, in association with the locking tongue (86).

9. A connector (36) according to the preceding claim, **characterized in that** the second tongue (114) is of transverse width complementary to the width of the annular groove (64) in the second pin (62).

10. A connector (36) according to any one of claims 2 to 9, **characterized in that** the front longitudinal end (86a) of the locking tongue (86) is fastened to the front segment (74).

11. A connector (36) according to any one of claims 2 to 10, **characterized in that** the body (68) also includes a rear bottom segment(98) having a front face (98a) that is provided with a rib (100) which is suitable for co-operating with the releasing tab (94) so as to hold the locking tongue (86) in a position in which the second recess (84) is open.

12. A connector according to the preceding claim, **characterized in that** the rear bottom segment (98) has a bottom bearing face (98i) for bearing against a top face (60s) of a horizontal bottom segment (60) of the end (34) of an arm (32a) belonging to the first category of arm.

13. A connector (36) according to any preceding claim, **characterized in that** it is suitable for receiving the end (34) of a third category of arm (32c), which end consists in a shaped-section member segment that extends substantially longitudinally forwards, in a third cylindrical recess (102) of longitudinal major axis, and that is open in its rear face.

14. A connector (36) according to the preceding claim, **characterized in that** the third recess (102) is formed in a separate part (104) mounted on the connector (36) and that is suitable for being fastened to the connector (36) by co-operation between complementary shapes (106, 108).

15. A connector (36) according to any one of claims 2 to 13, **characterized in that** the front segment (74) of the body (68) is provided with a notch (110) that is of longitudinal axis, that is open in its rear face, and that forms the front end of the third recess (102), and **in that** the bottom face (76i) of the rear segment (76) and the top face (98s) of the rear bottom segment (98) of the body (68), in combination with the inside vertical longitudinal faces of the side cheek plates (66), define a rear segment of the third recess (102).

16. A connector (36) according to any preceding claim, in combination with claim 2, **characterized in that** the end (34) of an arm (32c) belonging to the third category of arm is provided with a lug (65) which projects upwards relative to the top face (34s) of the end (34) of the arm (32c), and which is suitable for being received in a vertical orifice (96) of the rear segment (76) for longitudinally locking the end (34) of the arm (32c) in the position in which it is mounted in the third recess (102).

17. A connector (36) according to any preceding claim, **characterized in that** a portion (86i) of the locking tongue (86) is curved downwards so that, for at least one size of arm (32a) belonging to the first category of arm, and when the arm (32a) is in the assembled position, the film of material (90) is broken and the locking tongue (86) is deformed elastically upwards so as to exert a substantially vertical force downwards on the top face (60s) of a horizontal bottom segment (60) of the end (34) of the arm (32a).

18. A connector according to the preceding claim, **characterized in that**, for at least a second size of arm (32a) belonging to the first category of arm, the film of material connects the second longitudinal end (86b) of the locking tongue (86) to the body (68), so as to exert a substantially vertical force downwards on the top face (60s) of a second horizontal bottom segment (60) of the end (34) of the arm (32a).

19. A connector (36) according to any preceding claim, **characterized in that** the side edges of the locking tongue (86) are extended transversely outwards by rounded projections (122).

20. A connector (36) according to any one of claims 7 to 19, **characterized in that** the second tongue (114) is provided with two side studs (116) disposed on either side of the front longitudinal end (114a) of the second tongue (114), which studs extend transversely towards the outside of the connector (36) and pass through respective orifices (84) in the associated side cheek plates (66) so that the free end of each stud (116) comes flush with the outside vertical face (66e) of the associated cheek plate (66).

21. A connector (36) according to the preceding claim, **characterized in that**, when an arm (32c) belonging to the third category of arm is in the position in which it is mounted in the third recess (102), each of the side studs (116) is in vertical abutment against a top edge (82a) of the orifice (82) of the associated cheek plate (66).

22. A connector (36) according to any one of claims 7 to 21, **characterized in that** the free front end (114a) of the second tongue (114) is curved back downwards so that the end (34) of an arm (32c) belonging to the third category of arm is inserted into the third recess (102), the second tongue (114) is deformed elastically upwards, and the free front end (114a) of the second tongue (114) exerts a return force directed substantially downwards on the top face (34s) of the end (34) of the arm (32c).

23. A connector (36) according to any one of claims 7 to 22, **characterized in that** the free front end (114a) of the second tongue (114) is extended upwards by a finger (118) so that when the end (34) of an arm (32a) belonging to the first category of arm is in the assembled position, the second tongue (114) is deformed elastically downwards and acts via the finger (118) to exert a return force directed substantially upwards on a bottom face (56i) of a horizontal top first segment (56) of the end (34) of the arm (32a).

24. A connector (36) according to any preceding claim, **characterized in that** the front end segment (66a) of each cheek plate (66), which segment extends cantilevered out forwards from the body (68), is elastically deformable and, on its inside vertical longitudinal face (66i), is provided with a ramp-forming abutment (80) so as to retract when the end (34) of an arm (32a) belonging to the first category of arm is inserted, and so as to lock the U-shaped hook in the position in which it is mounted around the body (68) of the connector (36).

25. A connector (36) according to the preceding claim, **characterized in that** the ramp-forming abutment (80) extends over a top portion of the front end segment (66a) of the associated cheek plate (66), and **in that** a bottom portion of the front end segment (66a) is provided with an opening (81) for insertion of the U-shaped hook.

26. A connector (36) according to any preceding claim, in combination with claim 2, **characterized in that** the shapes in relief (78) comprise a rib (78a) provided on the inside vertical longitudinal face (66i) of each side plate (66) of the connector (36), which rib extends longitudinally above the top face (76s) of the rear segment (76) of the body (68) for positioning the end (34) of an arm (32a) belonging to the first category of arm.

27. A connector (36) according to the preceding claim, **characterized in that** the ribs (78a) are formed so that each of their top faces forms a vertical bearing surface for the top branch (56) of the U-shaped hook of at least a first size of arm, and so that their facing vertical faces transversely position the top branch (56) of the U-shaped hook of an arm (32a) of a second size.

28. A connector (36) according to any preceding claim, in combination with claim 2, **characterized in that** the shapes in relief further comprise a second projection (78b) disposed vertically below the body (68) so as to perform, at least in part, the positioning of the connector (36) against the inside end wall of the end (34) of an arm (32a) belonging to the first category of arm.

29. A connector (36) according to the preceding claim, **characterized in that** the second projection (78b) is formed so that its top face vertically positions the connector (36) for a first size of arm (32a), its bottom face vertically positions the connector (36) for a second size of arm (32a), and its inside vertical face transversely positions the connector (36) for a third size of arm (32a).

30. A connector (36) according to any preceding claim, **characterized in that** the bottom face of the locking tongue (86) is provided with ribs (124) for vertically and/or transversely positioning an arm (32a) of the first category and of at least one size.

31. A connector (36) according to the preceding claim, **characterized in that** each positioning rib (124) extends substantially vertically downwards along a side edge of the bottom face (86i) of the locking tongue (86).

32. A connector (36) according to any preceding claim, in combination with claim 19, **characterized in that** the projections (122) of the locking tongue (86) extend transversely so that the free transverse end of each projection (122) comes flush with the outside vertical face (66e) of the associated cheek plate (66).

33. A connector (36) according to the preceding claim, **characterized in that** each projection (122) is curved so that the curvature of its top face (122s) is substantially complementary to the outside cylindrical wall of a second pin (62) of the second size.

34. A connector (36) according to the preceding claim, **characterized in that** the curvature of a top edge of the opening (82) is substantially identical to the curvature of the outside cylindrical wall of a second pin (62) of the second size.

35. A connector (36) according to any preceding claim, in combination with claim 20, **characterized in that** each of the side studs (116) has a bearing surface for bearing against the outside cylindrical surface of a second pin (62) of the second size, which bearing surface is complementary to said outside cylindrical wall.

36. A connector (36) according to any preceding claim, **characterized in that** each cheek plate (66) is provided with a notch (126) which extends vertically downwards from the top edge of the associated cheek plate (66) and which is complementary to a manipulator element for manipulating the connector (36).

37. A connector (36) according to the preceding claim, in combination with claim 2, **characterized in that** the notch (126) substantially forms an upside-down T-shape in which the bottom edge of the horizontal branch extends vertically above the top face 74s) of the front element (74) of the body (68) of the connector (36).

38. A connector (36) according to the preceding claim, in combination with claim 26, **characterized in that** the ribs (78a) extend longitudinally forwards so as to extend to the front end of the front segment (74) of the body (68) of the connector.

## Patentansprüche

1. Verbindungsstück (36), um ein Ende eines Wischarms (32a, 32b, 32c) mit einer ersten Quergelenkachse (54) eines Strukturelements (38) eines Wischblatts (30) zu verbinden, das zwei parallele vertikale Seitenwangen (66) aufweist, die von einem Körper (68) miteinander verbunden werden, der eine erste Aufnahme (78) begrenzt, in die die erste Gelenkachse (54) radial eingeführt werden kann, des Typs:
- der zumindest teilweise in dem Boden des Endes (34) eines Arms (32a) aufgenommen werden kann, der zu einer ersten Armkategorie in Form eines U-förmigen Hakens gehört, über einen Abschnitt mit einer konvexen zylindrischen Außenfläche (74a) des Körpers (68) und über Reliefformen (78), die an den internen vertikalen Längsflächen (66i) gegenüber den Seitenwangen (66) angeordnet sind, so dass das Verbindungsstück (36) in dem Boden von Enden (34) des Arms (32a) aufgenommen werden kann, der der ersten Kategorie von Armen verschiedener Größen angehört, und
- der eine zweite Querachse (62) aufnehmen kann, die zu einer zweiten Armkategorie (32b) gehört und sich ab einem Seitenrand (34a) des Endes (34) des Arms (32b) in Querrichtung erstreckt, in einer zweiten zylindrischen Aufnahme (84) des Körpers (68), in die die zweite Achse (62) in Querrichtung eingeführt werden kann und die teilweise von einer elastisch verformbaren Arretierlasche (86) begrenzt ist, die sich im Wesentlichen in Längsrichtung erstreckt, deren erstes Längsende (86a) am Körper (68) befestigt ist und die eingezogen werden kann, um die Einführung der zweiten Achse (62) zu ermöglichen und das Arretieren in Querrichtung der in der zweiten Aufnahme (62) montierten zweiten Achse (62) zu bewirken, **dadurch gekennzeichnet, dass** das zweite Längsende (86b) der Arretierlasche (86) normalerweise über eine Materialfolie (90 mit dem Körper (68) verbunden ist, und dass die Abmessungen der Folie (90) so gewählt sind, dass die zweite Aufnahme (84) eine zweite Achse (62) einer ersten oder zweiten Größe aufnehmen kann, wobei die zweite Größe größer ist als die erste Größe, und die Einführung einer zweiten Achse (62) der zweiten Größe das Durchbrechen der Materialfolie (90) bewirkt.

2. Verbindungsstücke (36) gemäß einem der vorangehenden Ansprüche, **dadurch gekennzeichnet, dass** der Körper (68) einen vorderen Abschnitt (74) aufweist, der die erste Aufnahme (78) begrenzt, deren vordere Außenwand (74a) in dem Boden des U-förmigen Hakens des Arms (32a) aufgenommen werden kann, und einen hinteren Abschnitt (76), der sich horizontal über der Arretierlasche (86) erstreckt, deren obere horizontale Fläche (76s) eine Stützfläche eines oberen Schenkels (56) des U-förmigen Hakens definiert, und deren untere Fläche (76s) einen konkaven Abschnitt (85) aufweist, der die zweite Aufnahme (84) teilweise begrenzt, kombiniert mit einem konkaven, der oberen Fläche (86s) der Arretierlasche (86) gegenüberliegenden Abschnitt (88).

3. Verbindungsstück (36) gemäß einem der vorangehenden Ansprüche, **dadurch gekennzeichnet, dass** es ein Verriegelungselement aufweist, das in einem ringförmigen, in der zylindrischen Wand einer zweiten Achse (62) der ersten oder zweiten Größe ausgebildeten Hals (64) aufgenommen werden kann, um die zweite Achse (62) in montierter Position in der zweiten Aufnahme (84) in Querrichtung zu arretieren.

4. Verbindungsstücke (36) gemäß dem vorangehenden Anspruch, **dadurch gekennzeichnet, dass** die Arretierlasche (86) auf die zweite Achse (62) eine elastische Arretierkraft ausübt, um das Austreten des Verriegelungselements aus dem ringförmigen Hals (64) zu verhindern.

5. Verbindungsstück (36) gemäß einem der Ansprüche 3 oder 4, **dadurch gekennzeichnet, dass** das Verriegelungselement aus einem Nocken (92) besteht, der von der Arretierlasche (86) getragen wird.

6. Verbindungsstück (36) gemäß dem vorangehenden Anspruch, **dadurch gekennzeichnet, dass** das zweite Längsende (86b) der Arretierlasche (86) von einem Plättchen (94) verlängert wird, das das Entriegeln der zweiten Achse (62) steuert.

7. Verbindungsstück (36) gemäß einem der Ansprüche 3 oder 4, **dadurch gekennzeichnet, dass** das Verriegelungselement aus einem Nocken besteht, der von dem Körper (68) getragen wird.

8. Verbindungsstück (36) gemäß einem der Ansprüche 3 oder 4, **dadurch gekennzeichnet, dass** das Verriegelungselement aus einer zweiten elastisch verformbaren Lasche (114) besteht, die sich im Wesentlichen ab dem vorderen Längsende (76a) nach vorne des hinteren Abschnitts (76) des Körpers (68) erstreckt, und die sich nach oben einziehen kann, um die Einführung der zweiten Achse (62) zu ermöglichen, und die in dem umlaufenden Hals (64) der zweiten Achse (62) zumindest teilweise aufgenommen werden kann, um die Querarretierung der zweiten Achse (62) zu gewährleisten, kombiniert mit der Arretierlasche (86).

9. Verbindungsstück (36) gemäß dem vorangehenden Anspruch, **dadurch gekennzeichnet, dass** die zweite Lasche (114) eine zur Breite des ringförmigen Halses (64) der zweiten Achse (62) komplementäre Querbreite aufweist.

10. Verbindungsstück (36) gemäß einem der Ansprüche 2 bis 9, **dadurch gekennzeichnet, dass** das vordere Längsende (86a) der Arretierlasche (86) an dem vorderen Abschnitt (74) befestigt ist.

11. Verbindungsstück (36) gemäß einem der Ansprüche 2 bis 10, **dadurch gekennzeichnet, dass** der Körper (68) ferner einen hinteren unteren Abschnitt (98) aufweist, dessen eine Vorderfläche (98a) eine Rippe (100) umfasst, die mit dem Entriegelungsplättchen (94) zusammenwirken kann, um die Arretierlasche (86) in einer Öffnungsposition der zweiten Aufnahme (84) festzuhalten.

12. Verbindungsstück (36) gemäß dem vorangehenden Anspruch, **dadurch gekennzeichnet, dass** der untere hintere Abschnitt (98) eine untere Stützfläche (98i) für eine obere Fläche (60s) eines unteren horizontalen Abschnitts (60) des Endes (34) eines Arms (32a) der ersten Armkategorie aufweist.

13. Verbindungsstück (36) gemäß einem der vorangehenden Ansprüche, **dadurch gekennzeichnet, dass** es das Ende (34) einer dritten Armkategorie (32c) aufnehmen kann, das aus einem Profilabschnitt besteht, der sich im Wesentlichen in Längsrichtung nach vorne erstreckt, in einer dritten zylindrischen Aufnahme (102) mit länglicher Hauptachse und die in ihrer Rückseite offen ist.

14. Verbindungsstück (36) gemäß dem vorangehenden Anspruch, **dadurch gekennzeichnet, dass** die dritte Aufnahme (102) ein am Verbindungsstück (36) angebrachtes Anbauteil (104) ist, das formschlüssig (106, 108) am Verbindungsstück (36) befestigt werden kann.

15. Verbindungsstück (36) gemäß einem der Ansprüche 2 bis 13, **dadurch gekennzeichnet, dass** der vordere Abschnitt (74) des Körpers (68) eine Aussparung (110) mit länglicher Achse aufweist, die an ihrer Rückseite geöffnet ist und das vordere Ende der dritten Aufnahme (102) bildet, und dass die untere Fläche (76i) des hinteren Abschnitts (76) sowie die obere Fläche (98s) des unteren hinteren Abschnitts 98) des Körpers (68) gemeinsam mit den internen vertikalen Längsflächen der seitlichen Wangen (66) einen hinteren Abschnitt der dritten Aufnahme (102) begrenzen.

16. Verbindungsstück (36) gemäß einem der vorangehenden Ansprüche, kombiniert mit dem Anspruch 2, **dadurch gekennzeichnet, dass** das Ende (34) eines Arms (32c) der dritten Armkategorie einen Nocken (65) umfasst, der in Bezug auf die obere Fläche (34s) des Endes (34) des Arms (32c) nach oben absteht und in einer vertikalen Öffnung (96) des hinteren Abschnitts (76) aufgenommen werden kann, um das Ende (34) des Arms (32c) in montierter Position in der dritten Aufnahme (102) in Längsrichtung zu arretieren.

17. Verbindungsstück (36) gemäß einem der vorangehenden Ansprüche, **dadurch gekennzeichnet, dass** ein Abschnitt (86i) der Arretierlasche (86) nach unten gekrümmt ist, so dass, bei zumindest einer Armgrösse (32a) der ersten Armkategorie und wenn sich der Arm (32a) in montierter Position befindet, die Materialfolie (90 abgebrochen und die Arretierlasche (86) elastisch nach oben verformt wird, um eine im Wesentlichen vertikale Kraft nach unten auf die obere Fläche (60s) eines zweiten unteren horizontalen Abschnitts (60) des Endes (34) des Arms (32a) auszuüben.

18. Verbindungsstück gemäß dem vorangehenden Anspruch, **dadurch gekennzeichnet, dass** für mindestens eine zweite Armgrösse (32a) der ersten Armkategorie die Materialfolie das zweite Längsende (86b) der Arretierlasche (86) mit dem Körper (68) verbindet, um eine im Wesentlichen vertikale Kraft nach unten auf die obere Fläche (60s) eines zweiten unteren horizontalen Abschnitts (60) des Endes (34) des Arms (32a) auszuüben.

19. Verbindungsstück (36) gemäß einem der vorangehenden Ansprüche, **dadurch gekennzeichnet, dass** die Seitenränder der Arretierlasche (86) in Querrichtung nach außen durch abgerundete Erhebungen (122) verlängert sind.

20. Verbindungsstück (36) gemäß einem der Ansprüche 7 bis 19, **dadurch gekennzeichnet, dass** die zweite Lasche (114) zwei seitliche Butzen (116) umfasst, die auf beiden Seiten des vorderen Längsendes (114a) der zweiten Lasche (114) angeordnet sind, sich in Querrichtung nach Außen des Verbindungsstücks (36) erstrecken und eine Öffnung (84) der zugeordneten Seitenwange (66) durchqueren, so dass das freie Ende eines jeden Butzens (116) bündig mit der vertikalen Außenfläche (66e) der zugeordneten Wange (66) abschließt.

21. Verbindungsstück (36) gemäß dem vorangehenden Anspruch, **dadurch gekennzeichnet, dass** wenn sich ein Arm (32c) der dritten Armkategorie in montierter Position in der dritten Aufnahme (102) befindet, die seitlichen Butzen (116) vertikal gegen einen oberen Rand (82c) der Öffnung (82) der zugeordneten Wange (66) stoßen.

22. Verbindungsstück (36) gemäß einem der Ansprüche 7 bis 21, **dadurch gekennzeichnet, dass** das freie vordere Ende (114a) der zweiten Lasche (114) nach unten gekrümmt ist, so dass, wenn das Ende (34) eines Arms (32c) der dritten Armkategorie in die dritte Aufnahme (102) eingeführt ist, die zweite Lasche (114) elastisch nach oben verformt wird und das freie vordere Ende (114a) der zweiten Lasche (114) eine im Wesentlichen nach unten gerichtete Rückstellkraft auf die obere Fläche (34s) des Endes (34) des Arms (32c) ausübt.

23. Verbindungsstück (36) gemäß einem der Ansprüche 7 bis 22, **dadurch gekennzeichnet, dass** das freie vordere Ende (114a) der zweiten Lasche (114) von einem Finger (118) nach oben verlängert wird, so dass, wenn sich das Ende (34) eines Arms (32a) der ersten Armkategorie in montierter Position befindet, die zweite Lasche (114) elastisch nach unten verformt wird und über den Finger (118) eine im Wesentlichen nach oben gerichtete Rückstellkraft auf eine untere Fläche (56i) eines ersten oberen horizontalen Abschnitts (56) des Endes (34) des Arms (32a) ausübt.

24. Verbindungsstück (36) gemäß einem der vorangehenden Ansprüche, **dadurch gekennzeichnet, dass** der vordere Endabschnitt (66a) jeder Wange (66), der sich in Längsrichtung nach vorne des Körpers (68) auskragend erstreckt, elastisch verformbar ist und an seiner inneren vertikalen Längsfläche (66i) einen eine Rampe bildenden Anschlag (80) aufweist, um sich bei der Einführung des Endes (34) eines Arms (32a) der ersten Armkategorie einzuziehen, um so die Arretierung in montierter Position des U-förmigen Hakens um den Körper (68) des Verbindungsstücks (36) herum zu gewährleisten.

25. Verbindungsstück (36) gemäß dem vorangehenden Anspruch, **dadurch gekennzeichnet, dass** sich der rampenförmige Anschlag (80) über einen oberen Teil des vorderen Endabschnitts (66a) der zugeordneten Wange (66) erstreckt, und dass ein unterer Teil des vorderen Endabschnitts (66a) eine Einführungsöffnung (81) für den U-förmigen Haken aufweist.

26. Verbindungsstück (36) gemäß einem der vorangehenden Ansprüche, kombiniert mit Anspruch 2, **dadurch gekennzeichnet, dass** die Reliefformen (78) eine an der vertikalen internen Längsfläche (66i) jeder Wange (66) des Verbindungsstücks (36) vorgesehene Rippe (78a) umfasst, die sich in Längsrichtung über der oberen Fläche (76s) des hinteren Abschnitts (76) des Körpers (68) erstreckt, um ein Ende (34) eines Arms (32a) der ersten Armkategorie zu positionieren.

27. Verbindungsstück (36) gemäß dem vorangehenden Anspruch, **dadurch gekennzeichnet, dass** die Rippen (78a) so realisiert sind, dass ihre obere Fläche jeweils eine vertikale Stützfläche für den oberen Schenkel (56) des U-förmigen Hakens mindestens einer ersten Armgrösse bildet, und dass ihre sich gegenüberliegenden vertikalen Flächen die transversale Positionierung des oberen Schenkels (56) des U-förmigen Hakens eines Arms (32a) einer zweiten Größe gewährleisten.

28. Verbindungsstück (36) gemäß einem der vorangehenden Ansprüche, kombiniert mit Anspruch 2, **dadurch gekennzeichnet, dass** die Reliefformen eine zweite, vertikal unter dem Körper (68) vorgesehene Erhebung (78b) aufweisen, um zumindest teilweise die Positionierung des Verbindungsstücks (36) in dem Boden eines Endes (34) eines Arms (32a) der ersten Armkategorie zu gewährleisten.

29. Verbindungsstück (36) gemäß dem vorangehenden Anspruch, **dadurch gekennzeichnet, dass** die zweite Erhebung (78b) so realisiert ist, dass ihre obere Fläche die vertikale Positionierung des Verbindungsstücks (36) für eine erste Armgrösse (32a) gewährleistet, ihre untere Fläche die vertikale Positionierung des Verbindungsstücks (36) für eine zweite Armgrösse (32a) gewährleistet und ihre vertikale Innenfläche die transversale Positionierung des Verbindungsstücks (36) für eine dritte Armgrösse (32a) gewährleistet.

30. Verbindungsstück (36) gemäß einem der vorangehenden Ansprüche, **dadurch gekennzeichnet, dass** die untere Fläche der Arretierlasche (86) Rippen (124) für die vertikale und/oder transversale Positionierung eines Arms (32a) der ersten Kategorie mindestens einer Größe aufweist.

31. Verbindungsstück (36) gemäß dem vorangehenden Anspruch, **dadurch gekennzeichnet, dass** sich jede Positionierrippe (124) im Wesentlichen vertikal nach unten, entlang einem seitlichen Rand der unteren Fläche (86i) der Arretierlasche (86) erstreckt.

32. Verbindungsstück (36) gemäß einem der vorangehenden Ansprüche, kombiniert mit Anspruch 19, **dadurch gekennzeichnet, dass** sich die Erhebungen (122) der Arretierlasche (86) in Querrichtung erstrecken, so dass das freie Querende jeder Erhebung (122) bündig mit der vertikalen Außenfläche (66e) der zugeordneten Wange (66) abschließt.

33. Verbindungsstück (36) gemäß dem vorangehenden Anspruch, **dadurch gekennzeichnet, dass** jede Erhebung (122) so gekrümmt ist, dass die Krümmung ihrer oberen Fläche (122s) im Wesentlichen komplementär ist zu der zylindrischen Außenwand einer zweiten Achse (62) der zweiten Größe.

34. Verbindungsstück (36) gemäß dem vorangehenden Anspruch, **dadurch gekennzeichnet, dass** die Krümmung eines oberen Rands der Öffnung (82) etwa identisch ist mit der Krümmung der zylindrischen Außenwand einer zweiten Achse (62) der zweiten Größe.

35. Verbindungsstück (36) gemäß einem der vorangehenden Ansprüche, kombiniert mit Anspruch 20, **dadurch gekennzeichnet, dass** die seitlichen Butzen (116) jeweils eine Stützfläche aufweisen, gegen die zylindrische Außenfläche einer zweiten Achse (62) der zweiten Größe, die komplementär ist zu dieser zylindrischen Außenwand.

36. Verbindungsstück (36) gemäß einem der vorangehenden Ansprüche, **dadurch gekennzeichnet, dass** jede Wange (66) eine Rille (126) umfasst, die sich ab dem oberen Rand der zugeordneten Wange (66) vertikal nach unten erstreckt und die komplementär ist zu einem Handhabungselement des Verbindungsstücks (36).

37. Verbindungsstück (36) gemäß dem vorangehenden Anspruch, kombiniert mit Anspruch 2, **dadurch gekennzeichnet, dass** die Rille (126) im Wesentlichen ein umgekehrtes T bildet, dessen unterer Rand des horizontalen Schenkels sich vertikal über die obere Fläche (74s) des vorderen Elements (74) des Körpers (68) des Verbindungsstücks (36) erstreckt.

38. Verbindungsstück (36) gemäß dem vorangehenden Anspruch, kombiniert mit Anspruch 26, **dadurch gekennzeichnet, dass** sich die Rippen (78a) in Längsrichtung nach vorne erstrecken, so dass sie bis zum vorderen Ende des vorderen Abschnitts (74) des Körpers (68) des Verbindungsstücks verlaufen.
